(19) Europäisches Patentamt
European Patent Office
Office européen des brevets

(11) **EP 3 328 580 B1**

(12) **EUROPÄISCHE PATENTSCHRIFT**

(45) Veröffentlichungstag und Bekanntmachung des Hinweises auf die Patenterteilung:
**21.08.2019 Patentblatt 2019/34**

(21) Anmeldenummer: **16745460.2**

(22) Anmeldetag: **29.07.2016**

(51) Int Cl.:
**B23K 20/12** *(2006.01)*    **B23K 20/227** *(2006.01)*

(86) Internationale Anmeldenummer:
**PCT/EP2016/068167**

(87) Internationale Veröffentlichungsnummer:
**WO 2017/017254 (02.02.2017 Gazette 2017/05)**

(54) **VERFAHREN ZUM RÜHRREIBVERSCHWEISSEN SOWIE RÜHRREIBVERSCHWEISSTES WERKSTÜCK**

METHOD FOR FRICTION STIR WELDING AND FRICTION-STIR-WELDED WORKPIECE

PROCÉDÉ DE SOUDAGE PAR FRICTION-MALAXAGE ET PIÈCE SOUDÉE PAR FRICTION-MALAXAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.07.2015 DE 102015112416**

(43) Veröffentlichungstag der Anmeldung:
**06.06.2018 Patentblatt 2018/23**

(73) Patentinhaber: **Universität Stuttgart**
**70174 Stuttgart (DE)**

(72) Erfinder:
• **WERZ, Martin**
  **72581 Dettingen (DE)**
• **WEIHE, Stefan**
  **85114 Buxheim (DE)**

(74) Vertreter: **Prinz & Partner mbB**
**Patent- und Rechtsanwälte**
**Rundfunkplatz 2**
**80335 München (DE)**

(56) Entgegenhaltungen:
**EP-A2- 1 279 458       WO-A1-2015/033074**
**DE-A1-102013 110 034**

## Beschreibung

Die Erfindung betrifft ein Verfahren zum Rührreibverschweißen eines ersten Materialstücks mit einem zweiten Materialstück sowie ein rührreibverschweißtes Werkstück aus zumindest zwei Materialstücken. EP 1 279 458 A2 bildet die Basis für den Oberbegriff der Ansprüche 1 und 15.

Insbesondere im Fahrzeugbau wird aufgrund der Forderung nach wirtschaftlichem Leichtbau eine Mischbauweise von Blechen aus verschiedenen Metallarten zunehmend eingesetzt, beispielsweise Aluminium-Stahl. Die unterschiedlichen Materialien müssen hochfest miteinander verbunden werden, was eine Herausforderung für die entsprechende Schweißverbindung ist. Die unterschiedlichen Festigkeiten der verschiedenen Metallsorten sorgen dafür, dass die entsprechenden Bleche unterschiedlich dick sind. Beispielsweise werden üblicherweise Aluminiumbleche mit 2 mm Dicke an relativ dünne Stahlbleche von 0,6 mm bis 1 mm gefügt, weil der hochfestere Stahl eine geringere Dicke haben kann als das weniger feste Aluminium.

Es ist bereits angedacht, an der Schweißverbindungsstelle das hochfestere Materialstück umzubördeln oder abzukanten, um damit mehr Übergangsfläche im Bereich der Schweißnaht zu haben. Diese Technologie erfordert allerdings einen Umformvorgang des hochfesteren Materialstücks, üblicherweise also des Stahlblechs. Jedoch gibt es einige Stahlsorten, beispielsweise Martensitphasenstähle (22MnB5), die im gehärteten Zustand nicht über die notwendige Duktilität zum vollständigen Umformen verfügen, sodass mit ihnen eine solche Verbindung nicht möglich ist. Die Herstellung von sogenannten Tailored Welded Blanks aus dünnen Stahlblechen und etwas dickeren Aluminiumblechen würden durch das Umbördeln oder Abkanten zusätzlich verteuert werden. Der Vorteil dieses Verfahrens ist jedoch, dass auf der Außenseite, die beispielsweise im Fahrzeug die Außenhaut darstellt, kein Absatz im Bereich des Übergangs der Materialstücke, hier der Bleche, erkennbar ist. Die Verbindung der Materialstücke ist hier absatzlos.

Darüber hinaus gibt es zwischen beispielsweise einem dickeren Aluminiumblech und einem dünneren Stahlblech auch den herkömmlichen Stumpfstoß, welcher mittels Rührreibverschweißen erzeugt werden kann. Ein Nachteil der Stumpfstoßverbindung besteht darin, dass die durch die Schweißnaht geriffelte Oberfläche und der sich aufgrund der unterschiedlichen Dicken der Materialstücke ergebende Absatz nicht auf der gleichen Seite der Verbindung liegen und so keine Seite der Verbindung in den sichtbaren Bereich einer Karosserie ohne Nachbearbeitung gelegt werden kann.

Eine weitere Rührreibschweißverbindung ist eine Überlappverbindung, bei der die beiden Bleche aufeinandergelegt und anschließend verschweißt werden. Diese Überlappverbindungen haben jedoch den Nachteil, dass aufgrund der auseinanderliegenden Kraftangriffspunkte die Verbindung der Materialstücke zusätzlich durch ein Biegemoment belastet wird. Ferner führt die Kerbe am Rand des gefügten Bereichs zu einer niedrigen Schwingfestigkeit der Verbindung.

Aufgabe der Erfindung ist es deshalb, ein Verfahren zum Rührreibverschweißen von zwei Materialstücken zu schaffen, die eine stark unterschiedliche Schmelztemperatur haben, bei dem die Verbindung einerseits hochfest ist und andererseits vor dem Schweißen kein Umformen des hochfesten, üblicherweise dadurch dünneren Materialstücks zwingend notwendig ist. Ferner soll versucht werden, eine Verbindung von zwei Materialstücken zu schaffen, bei der eine Außenseite erzeugt wird, die im Übergang der Materialstücke ohne Absatz und Riffelung ausgeführt ist und somit zu einem sichtbaren Bereich eines Bauteils z.B. der Außenkarosserie eines Fahrzeugs werden kann.

Diese Aufgabe wird durch ein Verfahren zum Rührreibverschweißen eines ersten Materialstücks mit zumindest einem zweiten Materialstück gelöst, wobei das erste Materialstück eine Stirnseite und eine angrenzende flächige Seite, die eine Ober- oder eine Unterseite des ersten Materialstücks bildet und eine um wenigstens 250 °C, insbesondere wenigstens 300°C, oder insbesondere sogar eine um wenigstens 350°C höhere Schmelztemperatur als das zumindest eine zweite Materialstück hat, wobei das Verfahren durch folgende Schritte gekennzeichnet ist:

> a) das erste Materialstück wird durch zumindest ein zweites Materialstück angrenzend an die Stirnseite abschnittsweise so überlappt, dass an die flächige Seite und vorzugsweise seitlich der Stirnseite zumindest das oder eines der zweiten Materialstücke angrenzt, und

> b) durch ein Rührreibschweißwerkzeug mit einem sich drehenden Pin wird das erste Materialstück mit dem oder einem der zweiten Materialstücke stumpf- und überlappverschweißt, indem der Pin längs der Stirnseite verfahren wird und das Werkzeug längs der flächigen Seite im angrenzenden zweiten Materialstück verfahren wird.

Bei der Erfindung werden Materialien mit stark unterschiedlicher Schmelztemperatur und vorzugsweise unterschiedlichen Festigkeiten miteinander gefügt, indem durch Rührreibschweißen sowohl ein Überlappschweißen als auch ein Stumpfstoßschweißen erfolgt. Das erste, üblicherweise festere Materialstück wird vom zweiten Materialstück überlappt, wobei das zweite Materialstück vorzugsweise nicht nur an einer Seite, sondern an zwei angrenzenden Seiten an das erste Materialstück angrenzt. Die Stirnseite des ersten Materialstücks ist die eine Seite, üblicherweise eine Schmalseite, und die sogenannte flächige Seite, die im Vergleich zur Stirnseite großflächiger ist (bei einem Blech die Ober- oder Unterseite), die andere Seite. Durch das Rührreibverschweißen kommt es zu einem Verschweißen des zweiten Materialstücks sowohl an der Stirnseite als auch an der flächigen Seite, die vom zweiten Materialstück überlagert oder überdeckt ist. Der Verfahrweg des Pins verläuft längs der Stirnseite. Das Werkzeug wird ferner längs der flächigen Seite im angrenzenden zweiten Materialstück verfahren. Selbst wenn vor dem Verschweißen das zweite Materialstück nicht an die Stirnseite angrenzt, so wird es durch das Werkzeug so umgeformt, dass es an die Stirnseite angeschweißt wird. Auch hier kommt es folglich zu einer Stumpfstoß- und Überlappverschweißung.

Aus der DE 698 23 746 T2 und der JP 2005-32 42 51 A sind Verfahren zum Rührreibverschweißen von zwei Materialstücken bekannt, wobei sich diese Materialstücke leicht überlappen, und zwar innenseitig auf der dem Rührreibschweißwerkzeug entgegengesetzten Seite. Dies hat den Grund, dass eines der Werkstücke auf einer Schulter des anderen Werkstücks aufliegen soll, um die Werkstücke vor dem Verschweißen zueinander zu positionieren. Außenseitig ist dann sichergestellt, dass die beiden Werkstücke ohne Absatz aneinander anschließen und sich ein glatter, absatzloser Übergang ergibt. Von diesem glatten äußeren Übergang der beiden Materialstücke aus wird reibverschweißt, indem der Pin von dieser Seite in die Werkstücke, und zwar zu gleichen Teilen in beide Werkstücke, eindringt. Es ergibt sich eine massive Schweißnaht, bei der die Werkstoffe beider Materialstücke kräftig durchmischt sind. Die Pinspitze dringt dabei so tief ein, dass sie auch den Überlappungsbereich mit erfasst. Die im Querschnitt V- oder U-förmige Schweißnaht (soweit abgrenzbar zum angrenzenden Material) liegt somit auch im ursprünglichen Überlappungsbereich.

Die Erfindung setzt sich von diesem Stand der Technik deutlich ab, denn die Erfindung sieht vor, dass der Pin nicht gleichermaßen in beide Werkstücke und damit auch in ein härteres Werkstück eindringt, sondern dass der Pin längs der Stirnseite des höher schmelzenden Materialstücks verfährt und gleichzeitig eine Überlappverschweißung und eine Stumpfstoßverschweißung erzeugt, wogegen der Stand der Technik nur eine einzige dicke Schweißnaht schafft, die keinen Unterschied zwischen einem Überlappstoß und einem Stumpfstoß mehr zeigt, nachdem der Pin in beide Werkstücke gleichermaßen umfangreich eingetaucht ist. Während also in diesem Stand der Technik die virtuelle Drehachse des Pins exakt im Übergang oder im Stoßbereich zwischen den beiden Materialstücken liegt, ist der Pin beim erfindungsgemäßen Verfahren extrem stark seitlich versetzt, denn der Außenumfang der Pinspitze ist zur Stirnseite des stabileren, ersten Materialstücks ausgerichtet und läuft mit geringem Abstand an diesem vorbei oder kratzt das erste Materialstück allenfalls minimal an.

Im Querschnitt des erzeugten Werkstücks ist folglich die ursprüngliche Geometrie des ersten Materialstücks im Bereich der Schweißnähte erhalten geblieben, denn es ergibt sich keine V- oder U-förmige dicke Schweißnaht.

In Bezug auf das Rührreibschweißwerkzeug ist Folgendes zu beachten, denn es besteht aus zumindest einem Pin und zumindest einer Schulter. Die Schulter ist derjenige Teil des Werkzeugs, welcher auf der Oberseite des erzeugten Werkstücks beim Schweißen aufliegt. Hierbei hat die Schulter eine im Wesentlichen radial oder streng radial verlaufende Auflagefläche. Von dieser Fläche aus erstreckt sich der Pin zu seiner Spitze hin. Der Pin selbst wird vorzugsweise bei der vorliegenden Erfindung mit einem Absatz versehen, d.h. zwischen der Schulter und der Pinspitze ergibt sich eine weitere im Wesentlichen radiale Fläche.

Beim erfindungsgemäßen Verfahren kann eine Schulter verwendet werden, die feststehend oder die drehend ausgeführt ist. Der Absatz am Pin kann entweder am drehenden Pin angeformt sein oder ein Teil der sich drehenden Schulter oder ein komplett separates Teil sein. Eine weitere Option besteht darin, dass auch die Schulter einstückiger Bestandteil des Pins ist und damit drehend ausgeführt ist. Ein weiterer Vorteil der Erfindung besteht darin, dass, wenn das erste Materialstück dünner als das zweite Materialstück ist, was aufgrund der geringeren Festigkeit des zweiten Materialstücks normalerweise bei der Verschweißung von Blechen immer der Fall sein dürfte, die durch die Schweißnaht geriffelte Seite des entstehenden Werkstücks auf derjenigen Seite mit dem aufgrund der unterschiedlichen Blechdicken resultierenden Absatz liegt. Im sichtbaren Bereich, wo es keinen Versatz am Übergang der beiden Materialstücke gibt, ist somit keine Riffelung zu sehen.

Es kann ferner ein Pin verwendet werden, der eine Pinspitze, die sich bis zum Absatz erstreckt, und einen sich vom Absatz bis zu einer Schulter erstreckenden Abschnitt mit einer axialen Länge hat. Die axiale Länge und die Dicken des ersten und des zweiten Materialstücks sind so aufeinander abgestimmt, dass die axiale Länge größer als die Differenz der beiden Dicken ist und eine vorstehende Schweißnaht erzeugt wird. Diese Weiterentwicklung des Verfahrens ist insbesondere dann vorteilhaft, wenn das zweite Materialstück keine zum ersten Materialstück an dessen Rand komplementäre Ausnehmung besitzt, so dass beim Schweißen zusätzliches Material zur Verfügung steht. Dieses Material füllt den Bereich bis zur Schulter aus, so dass eine vorstehende Schweißnaht entsteht. Bisher wird im Stand der Technik vorgeschlagen, das dickere und üblicherweise weichere obere Materialstück im Überlappbereich auf seine ursprüngliche Dicke herunterzupressen, was aber hohe Axialkräfte erfordert und übermäßig Reibarbeit verursacht, verbunden mit einem zu hohen Wärmeeintrag. Dies kann die Festigkeit und die Bruchdehnung negativ beeinflussen. Ferner kann diese Technik zu einer Nahtunterwölbung führen. Die vorgenannte Verwendung eines besonders abgestimmten Pins vermeidet diese Nachteile. Besonders wirken sich diese Vorteile beim Verschweißen von Blechen aus, d.h. ebenen, plattenförmigen Teilen mit gleichbleibender Dicke. Die Erhöhung der Naht ergibt sich vorzugsweise nicht aus zusätzlichen Blechlagen oder angeformten Verdickungen, sondern aus der ursprünglichen Überlappung der Materialstücke, insbesondere der Bleche. In Fällen, in denen das zweite Materialstück eine zum ersten Materialstück an dessen Rand komplementäre Ausnehmung besitzt, können zusätzliche Blechlagen oder angeformte Verdickungen in einem das erste Materialstück überlappenden, zu verschweißenden Bereich verwendet werden, so dass zusätzliches Material zur Erzeugung einer vorstehenden Schweißnaht zur Verfügung steht. Falls das obenliegende, zweite Materialstück auf seiner Unterseite eine Ausnehmung zur Aufnahme des Randes des ersten Materialstücks hat, ist die Verdickung z.B. auf der Oberseite im Bereich der Ausnehmung und gegebenenfalls seitlich darüber hinaus vorgesehen.

Beim erfindungsgemäßen Verfahren kann ein Zusatzwerkstoff außen zugeführt werden, was jedoch nicht zwingend der Fall ist. Die Rührreibverschweißung kann auch ohne jeglichen Zusatzwerkstoff ausgeführt werden.

Eine Ausführungsform der Erfindung sieht vor, dass der Pin zu wenigstens 90 %, vorzugsweise zu wenigstens 95 % in dem zweiten Materialstück verfahren wird, insbesondere dass der Pin vollständig im wenigstens zweiten Materialstück, ohne Kontakt mit der Stirnseite und/oder der flächigen Seite des ersten Materialstücks verfahren wird. Das bedeutet, der Pin rührt fast ausschließlich oder sogar ausschließlich nur im zweiten Materialstück, das eine niedrigere Schmelztemperatur als das erste Materialstück besitzt. Dennoch wird dadurch eine hervorragende Rührreibschweißverbindung erzeugt, wie Versuche gezeigt haben, obwohl das höher schmelzende erste Materialstück vom Pin allenfalls "angekratzt" wird. Alternativ oder zusätzlich kann der Pin und/oder ein Absatz des Pins beim Schweißvorgang längs einer Bahn verfahren werden, die einerseits durch den Verlauf der Stirnseite bzw. der flächigen Seite des ersten Materialstücks, bezogen auf den noch nicht verschweißten Zustand, definiert wird und andererseits eine Bahnbreite besitzt, die +/- 10 % der Dicke des nichtverschweißten Materialstücks im Bereich der Stirnseite beträgt. Das bedeutet, es ist eine Art räumlicher Korridor für die Vorschubbewegung des Pins vorgegeben, der durch den Verlauf der Stirnseite und der flächigen Seite des ersten Materialstücks in dessen unverschweißtem Zustand vorgegeben ist. Bezogen auf ein liegendes erstes Materialstück ist dieser Korridor sowohl in horizontaler Richtung als auch in vertikaler Richtung definiert, nämlich durch die Stirnseite bzw. durch die die Oberseite definierende flächige Seite im Schweißbereich. Längs der flächigen Seite bewegt sich der Pin mit seinem Absatz. Längs der Stirnseite bewegt sich der Pin mit der Umfangsfläche seiner Pinspitze. Insbesondere verläuft die zuvor erwähnte Bahn oder der zuvor erwähnte Korridor im Bereich vom Kontakt mit der Stirnseite und der flächigen Seite bis zu maximal 0,1 mm Eindringtiefe in das erste Materialstück, d. h. der Pin kratzt oder schabt das erste Materialstück nur maximal oberflächlich etwas an.

Im Gegensatz zum oben genannten Stand der Technik wird beim erfindungsgemäßen Verfahren vorzugsweise das Rührreibverschweißen so durchgeführt, und zwar längs der zuvor erwähnten Bahnen oder Korridore, dass die unterschiedlichen Werkstoffe des ersten und zweiten Materialstücks nicht durchmischt werden. Versuche haben jedoch ergeben, dass diese Art des Rührreibverschweißens zu hervorragenden Festigkeitswerten führt. Alternativ kann eine minimale, sehr dünne Diffusionsschicht von maximal 0,5 mm Dicke, vorzugsweise maximal 0,1 mm oder sogar nur maximal 0,05 mm Dicke beim Ankratzen entstehen.

Wie zuvor erläutert hat der Pin vorzugsweise einen Absatz, welcher der flächigen Seite zugewandt ist und für die Überlappverschweißung sorgt. Gleichzeitig wird durch die vom Absatz abstehende Pinspitze die Stumpfstoßverschweißung durchgeführt. Wie erläutert kann der Absatz einstückiger Bestandteil des Pins sein, einstückiger Bestandteil einer abgesetzten, drehenden Schulter oder ein separates Teil.

Eine besonders verschleißarme Variante sieht vor, dass das Rührreibschweißwerkzeug nur so weit in Richtung zur flächigen Seite zugestellt wird, dass erweichtes Material des zumindest einen zweiten Materialstücks permanent zwischen der Werkzeugschulter und der flächigen Seite des ersten Materials selbst vorhanden ist. Das zweite Material, welches eine niedrigere Schmelztemperatur hat, dient somit als Schmier- und Kühlmittel zwischen Werkzeugschulter und der flächigen Seite des ersten Materials, welches hochfester ist und üblicherweise auch härter. Somit bedeutet ein Kontakt des Werkzeugs mit dem ersten Materialstück erhöhten Verschleiß.

Vorzugsweise wird ein Pin mit einer Pinspitze eingesetzt, deren axiale Länge, gemessen vom freien Ende des Pins bis zum Absatz des Pins, im Wesentlichen der Dicke des ersten Materialstücks an dessen Stirnseite entspricht. Natürlich kann das erste Materialstück beabstandet von der verschweißten Stirnseite auch dicker werden, es besteht kein zwingender Grund, eine stets gleichbleibende Dicke vorzusehen. Bei der Verschweißung von zwei Blechen ist dies zwar unüblich, das erfindungsgemäße Verfahren ist jedoch nicht auf die Verschweißung von zwei Blechen limitiert.

Statt einen Pin zu verwenden, der mit einem Absatz ausgeführt ist und der bei einer Verfahrbewegung gleichzeitig stumpf- und überlappverschweißt, können diese beiden Verschweißungen auch nacheinander durch einen oder mehrere Pins erfolgen, wobei der für die Überlappverschweißung zuständige Pin stirnseitig längs der flächigen Seite verfahren wird. Das bedeutet in diesem Fall, dass das stirnseitige, freie Ende des Pins an der flächigen Seite des ersten Materialstücks ankratzt oder nahe an dieser entlangfährt und dass auch hier vorzugsweise stets erweichtes Material des zweiten Materialstücks zwischen Werkzeugschulter und flächiger Seite als Kühl- und Schmiermittel vorhanden ist.

Eine bevorzugte Ausführungsform der Erfindung sieht jedoch vor, dass das erste Materialstück und das zumindest eine zweite Materialstück zumindest im Schweißbereich, vorzugsweise insgesamt, als flache Platten, d. h. Bleche ausgebildet sind. Das erfindungsgemäße Verfahren eignet sich besonders gut im Fahrzeugkarosseriebau.

Eine besonders einfache und günstige Möglichkeit, zwei im Schweißbereich plattenförmige Materialstücke miteinander zu verschweißen bzw. zwei Bleche miteinander zu verschweißen, besteht darin, dass das zweite Materialstück relativ zum ersten Materialstück schräg zur Stirnseite längs einer sogenannten Übergangskante sowie zusätzlich auch noch schräg zur flächigen Seite verläuft und diese dabei überkragt. Die Übergangskante ist diejenige Kante, die sich zwischen Stirnseite und flächiger Seite ergibt. Dies kann an einem Beispiel leichter erläutert werden. Ist das erste Materialstück ein Blech, so wird dieses auf eine Unterlage flach aufgelegt. Das zweite Materialstück wird dann einerseits auf die Unterlage und andererseits auf die Übergangskante gelegt, sodass dieses zweite Materialstück von der Unterlage aus schräg aufwärts, bis zur Übergangskante und dann noch weiter über das erste Materialstück und damit auch über dessen flächige Seite hinweg kragt. Damit ergibt sich zwangsläufig ein Spalt zwischen der Unterseite des zweiten Materialstücks und der darunterliegenden flächigen Seite. Auch ergibt sich ein Spalt zwischen der Stirnseite und dem seitlich dazu beabstandeten, die Stirnseite nicht berührenden Teil des zweiten Materialstücks. Das bedeutet, im Ausgangszustand berührt das zweite Materialstück weder die flächige Seite noch die Stirnseite und damit nicht die Bereiche, die verschweißt werden sollen. Das Rührreibschweißwerkzeug wird jedoch unter Aufbringung von Druck das zweite Materialstück in Richtung zur flächigen Seite verformen und überlapp- und stumpfverschweißen. Der Druck, der durch das Rührreibschweißwerkzeug aufgebracht wird, in axialer Richtung des Pins, drückt das zweite Materialstück, welches ja zudem beim Schweißen erwärmt und dadurch weich wird, in die zuvor genannten Spalte, die damit komplett gefüllt werden. Trotz des ursprünglichen schrägen Verlaufs des zweiten Materialstücks ergibt sich ein Übergang zwischen den Materialstücken nach dem Schweißen, der durch eine glatte, absatzfreie und spaltfreie Außenhaut und damit einen glatten Übergang zwischen den beiden Materialstücken an der Außenhaut gekennzeichnet ist.

Es ist in diesem Zusammenhang auch möglich, das zweite Materialstück vor dem Verschweißen noch mit einem geringen Abstand zur Übergangskante anzuordnen, der dann beim Verschweißen keine Rolle mehr spielt, da der Druck des Rührreibschweißwerkzeugs so groß ist, dass die beiden Materialstücke dennoch verschweißt werden. Diese Variante eignet sich besonders, um eine Bearbeitung des zweiten Materialstücks im Bereich des Randes des ersten Materialstücks zu vermeiden.

Vorzugsweise ist das zweite Materialstück ein einziges Werkstück, beispielsweise ein Blech. Eine alternative Ausführungsform hingegen sieht vor, dass mehrere zweite Materialstücke, insbesondere gleichen Werkstoffs, vorgesehen sind. Eines der zweiten Materialstücke grenzt dabei stirnseitig an das erste Materialstück an und wird mit ihm stumpfverschweißt. Ein weiteres zweites Materialstück liegt über oder auf der flächigen Seite auf und wird dann mit dem ersten Materialstück überlappverschweißt. Vorteilhafterweise wird beim Schweißen gleichzeitig die Stumpfverschweißung und die Überlappverschweißung vorgenommen. Ferner werden die beiden zweiten Materialstücke miteinander rührreibverschweißt. Darüber hinaus ist es auch möglich, mit dieser Variante sehr einfach einen Dickenausgleich zwischen dem dünnen ersten Materialstück und dem üblicherweise dickeren, zweiten Materialstück zu erreichen. Dann wird einfach ein gegebenenfalls sogar sehr schmales, dünnes zweites Materialstück auf die Stirnseite des ersten Materialstücks aufgelegt, um ein Schweißmaterial für die Überlappschweißung zur Verfügung zu stellen.

Der das erste Materialstück längs der flachen Seite überlappende Teil des zweiten Materialstücks muss nicht komplett, sondern kann nur abschnittsweise mit der flachen Seite des ersten Materialstücks überlappverschweißt werden. Zu dem dann gebildeten freien Endrand hin ergibt sich ein nicht mit dem ersten Materialstück verschweißter Randstreifen des zweiten Materialstücks. Dieser Randstreifen wird nach dem Schweißen abgetrennt, insbesondere durch spanende Bearbeitung oder ganz einfach durch Abreißen.

Dieses Abreißen oder anderweitige Entfernen kann dadurch erleichtert werden, dass beim Überlappverschweißen bewusst eine Schlauchpore erzeugt wird, und zwar am Übergang des überlappverschweißten Abschnitts und des Randstreifens, längs der dann der Randstreifen abgetrennt wird. Die Schlauchpore kann vereinfacht funktional wie eine Perforation betrachtet werden.

Bevorzugte Materialpaarungen für das erste und das zweite Materialstück sind Stahl (erstes Materialstück) und Aluminium oder Kupfer (zweites Materialstück) oder Kupfer für das erste Materialstück und für das zumindest eine zweite Materialstück Aluminium.

Als Materialien für das erste und/oder zweite Materialstück können auch Knetwerkstoffe oder Gußwerkstoffe verwendet werden.

Gerade wenn Stahlbleche verwendet werden, so sind diese oft zinkbeschichtet. Dies betrifft dann vor allem die flache Seite. Die Erfindung sieht vor, dass das Rührreibschweißwerkzeug beim Schweißen axial so zugestellt wird, dass die Zinkschicht im nicht verschweißten Bereich intakt bleibt, denn an diesen Bereich kann Feuchtigkeit kommen, die zu einer Korrosion führen könnte.

Wenn von gleichen Materialien die Rede ist, so sind damit einerseits wirklich identische Materialien mit umfasst, andererseits sind auch optional gewisse Legierungsvarianten oder Legierungsunterschiede mit umfasst. Beispielsweise kann bei Verwendung von mehreren zweiten Materialstücken eines aus einer Aluminiumlegierung mit Hauptlegierungsbestandteil Magnesium und das andere aus einer Aluminiumlegierung mit Hauptlegierungsbestandteil Silizium sein.

Das Rührreibschweißwerkzeug hat erfindungsgemäß eine Schulter, die drehend oder feststehend sein kann, sowie eine Pinspitze, die bis zu einem radialen Absatz reicht, wobei der Pin nach dem radialen Absatz wieder einen zylindrischen Abschnitt hat, der dann zur Schulter verläuft. Vorzugsweise ist die axiale Länge der Pinspitze 0,8- bis 1,2-mal so groß wie die Dicke des ersten Materialstücks im Bereich der Verschweißung (die Dicke wird im nicht verschweißten Zustand des ersten Materialstücks gemessen).

Die axiale Länge des Pins gemessen von der Schulter bis zum Ende des Pins sollte im Bereich von 0,8- bis 1,2-mal der Dicke des zweiten Materialstücks im Bereich der Stumpfverschweißung sein, natürlich ebenfalls vor dem Verschweißen gemessen.

Darüber hinaus ist es von Vorteil, wie zahlreiche Versuche ergeben haben, dass die Durchmesserdifferenz zwischen dem Durchmesser des zylindrischen Stücks des Pins zwischen dem Absatz und der Schulter und der Pinspitze größer gleich 2-mal der Materialdicke des ersten Materialstücks im Bereich der Schweißnaht (ebenfalls gemessen vor dem Verschweißen) ist.

Ferner sollte der Durchmesser des Werkzeugs im Bereich der Schulter 1,5- bis 2,5-mal dem Durchmesser des Pins im Bereich zwischen dem Absatz und der Schulter sein.

Diese Verhältnisse haben sich bei den umfangreichen Versuchen der Anmelderin als optimal herausgestellt.

Wichtig für die vorliegende Erfindung ist die exakte Schweißbahn, die das Werkzeug relativ zu den Werkstücken zurücklegt. Wie zuvor schon erläutert, sollte die Stirnseite des überlappten ersten Materialstücks durch den Pin allenfalls "angekratzt" werden. Um zu vermeiden, dass der Pin zu weit von der Stirnseite entfernt vorbeifährt oder zu tief in das erste Materialstück eindringt, sieht die Erfindung in einer Ausgestaltung eine Messung der unter dem zweiten Materialstück liegenden Kante des ersten Materialstücks vor. Die zu verschweißende Kante des ersten Materialstücks wird hierbei vor oder nach Auflegen des zweiten Materialstücks und/oder vor oder während des Verfahrens des Pins gemessen. Abhängig von dieser Messung wird die Zustellbewegung des Pins bezogen auf die Richtung zum ersten Materialstück gesteuert oder geregelt. Dabei kann nicht nur die Lage der Kante, sondern auch deren Verlauf über den ganzen oder Abschnitte des zu verschweißenden Bereichs erfasst werden.

Messmethoden hierzu sind taktil oder berührungslos, z.B. über einen Laserscanner, über Bilderfassung oder per Ultraschall. Insbesondere wird das erste Werkstück in einer Bearbeitungsposition fixiert, dann vermessen und schließlich in der bestehenden Fixierposition verschweißt.

Ein weiteres vorteilhaftes Verfahren betrifft die Weiterverarbeitung der miteinander verschweißten Materialstücke, insbesondere bei der Blechbearbeitung. Wird das durch Schweißen hergestellte Werkstück anschließend gestanzt, so wird dieses auf ein Schneidwerkzeugunterteil gelegt, und zwar mit seiner flachen Seite. Dasselbe gilt auch für ein Umformverfahren, also ein Biegen des Werkstücks. Die sogenannte Gutteilseite, also die Seite des Teils, welche später verwendet wird, sollte auf dem Unterteil aufliegen.

Schließlich betrifft die Erfindung ein Werkstück, mit einem ersten Materialstück und zumindest einem mit dem ersten Materialstück rührreibverschweißten zweiten Materialstück, wobei das erste Materialstück eine Stirnseite und eine angrenzende flächige Seite, die eine Ober- oder eine Unterseite des ersten Materialstücks bildet, und eine um wenigstens 250°C höhere Schmelztemperatur als das zumindest eine zweite Materialstück hat, und das erste Materialstück an der Stirnseite mit dem zumindest einen zweiten Materialstück stumpfverschweißt ist und an der flächigen Seite mit dem oder einem zweiten Materialstück überlappverschweißt ist, wobei die unterschiedlichen Werkstoffe der Materialstücke im Schweißbereich nicht durchmischt sind.

Beim erfindungsgemäßen Werkstück ist vorgesehen, dass sich die unterschiedlichen Werkstoffe im Schweißbereich nicht durchmischen, eine minimale, sehr dünne Diffusionsschicht von maximal 0,5 mm Dicke, vorzugsweise maximal 0,1mm oder sogar nur maximal 0,05 mm Dicke beim Ankratzen entsteht, worin sich das Werkstück deutlich vom Stand der Technik absetzt.

Die Schweißnaht hat eine im Querschnitt L-förmige Gestalt, wobei ein Schenkel die Stumpfstoßschweißnaht und der andere die Überlappschweißnaht bildet.

Darüber hinaus kann das Werkstück selbst auch noch viele vorteilhafte weitere Merkmale enthalten, die im Zusammenhang mit dem vorgenannten erfindungsgemäßen Verfahren bereits erwähnt wurden, unter anderem die Materialdicken und die Materialpaarungen.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:

- Figur 1 eine Querschnittsansicht durch ein Rührreibschweißwerkzeug vor dem Zustellen gegen die Materialstücke,

- Figur 2 das Rührreibschweißwerkzeug nach Figur 1 beim Durchführen des erfindungsgemäßen Reibschweißvorgangs und Verschweißen der in Figur 1 gezeigten Materialstücke,

- Figur 3 mehrere nebeneinander- und übereinandergelegte Materialstücke gemäß einer anderen Variante, vor und nach dem erfindungsgemäßen Rührreibschweißen,

- Figur 4 eine weitere Variante von zueinander vor dem erfindungsgemäßen Rührreibschweißen positionierten Materialstücken samt dem Rührreibschweißwerkzeug,

- Figur 5 das erfindungsgemäße Rührreibschweißen bei den Werkstücken nach Figur 4,

- Figur 6 eine weitere Variante von übereinandergelegten ersten Materialstücken, bei denen eine Vorprägung stattfindet und die anschließend erfindungsgemäß rührreibverschweißt werden,

- Figur 7 einen Querschnitt durch eine Variante des beim erfindungsgemäßen Verfahren eingesetzten Rührreibschweißwerkzeugs,

- Figur 8 einen Querschnitt durch eine weitere Variante des beim erfindungsgemäßen Rührreibschweißverfahren eingesetzten Werkzeugs,

- Figur 9 das erfindungsgemäße Werkstück nach dem Rührreibverschweißen während des Abtrennens des unverschweißten Bereichs,

- Figur 10 das erfindungsgemäße Werkstück während des Abtrennens des unverschweißten Bereichs,

- Figur 11 das erfindungsgemäße Werkstück nach dem Abtrennen des unverschweißten Bereichs, wobei das Abtrennen hier durch Abreißen erfolgt,

- Figur 12 eine weitere Variante von übereinanderliegenden Materialstücken, die erfindungsgemäß rührreibverschweißt werden, wobei hier der Pin anders als bei den bisherigen Ausführungsformen geformt ist,

- Figur 13 eine weitere Variante des beim erfindungsgemäßen Verfahren eingesetzten Werkzeugs,

- Figur 14 noch eine weitere Variante des Rührreibschweißwerkzeugs, das beim erfindungsgemäßen Verfahren eingesetzt wird,

- Figuren 15a und 15b zwei aufeinanderfolgende Verfahrensschritte zum sequenziellen Überlapp- und Stumpfstoßschweißen gemäß einer Variante der Erfindung,

- Figur 16 eine weitere Variante des erfindungsgemäßen Verfahrens,

- Figur 17 eine Draufsicht auf eine Variante eines Rührreibschweißwerkzeugs mit versetzten Pins zur Durchführung des erfindungsgemäßen Verfahrens,

- Figur 18 eine Schnittansicht durch das Rührreibschweißwerkzeug nach Figur 17 längs der Linie XVIII-XVIII,

- Figur 19 eine Schnittansicht durch das Rührreibschweißwerkzeug nach Figur 17 längs der Linie XIX-XIX,

- Figur 20 eine weitere Variante von übereinanderliegenden Materialstücken, die erfindungsgemäß rührreibverschweißt werden,

- Figuren 21a und 21b wieder eine weitere Variante von übereinandergelegten Materialstücken, die durch das erfindungsgemäße Verfahren miteinander reibverschweißt werden, und zwar vor dem Zustellen des Schweißwerkzeugs bzw. beim Rührreibverschweißen,

- Figur 22 eine Schnittansicht durch eine Variante des bei der Erfindung verwendeten Rührreibschweißwerkzeugs, bei dem mit einem Zusatzwerkstoff gearbeitet wird,

- Figur 23 das Rührreibschweißwerkzeug nach Figur 22 während des Schweißens in Seitenansicht,

- Figur 24 das Rührreibschweißwerkzeug nach Figur 23 in leicht modifizierter Form während des Durchführens des erfindungsgemäßen Verfahrens,

- Figur 25 wieder eine andere Variante des Rührreibschweißwerkzeugs beim Durchführen des erfindungsgemäßen Verfahrens, hier mit sogenanntem abgesetzten Pin,

- Figur 26 eine weitere Variante des Werkzeugs, das beim erfindungsgemäßen Verfahren eingesetzt werden kann, hier ein sogenanntes Doppelschulterwerkzeug mit abgesetztem Pin,

- Figur 27 einen Querschnitt durch das erfindungsgemäße Werkstück beim Durchführen des erfindungsgemäßen Verfahrens und beim Herstellen einer Schlauchpore,

- Figur 28 eine Variante der Ausführungsform nach Figur 4 mit gleichen Blechdicken und geändertem Werkzeug,

- Figur 29 das erfindungsgemäße Verfahren beim Rührreibverschweißen der Bleche gemäß Figur 28,

- Figur 30 übereinanderliegende, andere Bleche vor und nach dem Durchführen des erfindungsgemäßen Verfahrens,

- Figur 31 das erfindungsgemäße Verfahren, bei dem die in Figur 30 dargestellten Bleche rührreibverschweißt werden,

- Figur 32 eine weitere Variante des erfindungsgemäßen Verfahrens, und

- Figur 33 das nach dem in Figur 32 gezeigten Verfahren erfindungsgemäß hergestellte Werkstück.

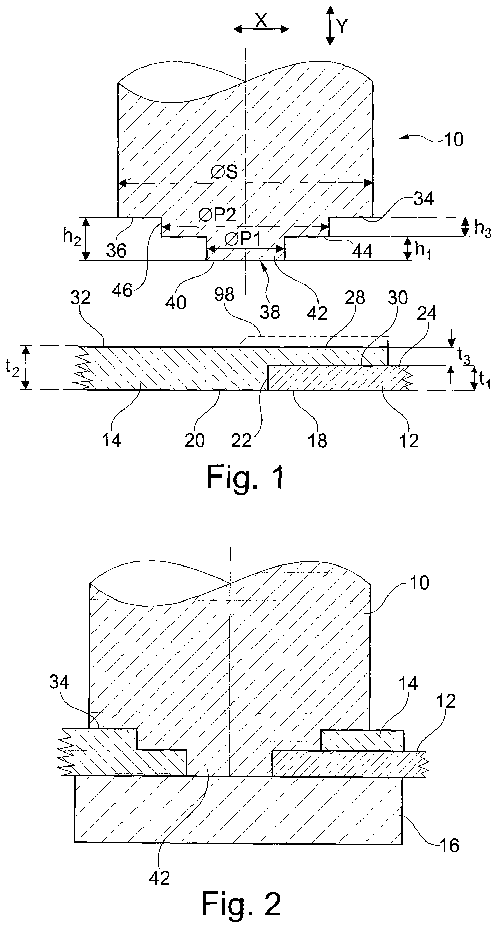

In Figur 1 ist ein Rührreibschweißwerkzeug 10 dargestellt, mit welchem ein erstes Materialstück 12 sowie ein zweites Materialstück 14 miteinander rührreibverschweißt werden.

Das erste Materialstück 12 hat eine um wenigstens 250°C, insbesondere um wenigstens 300°C oder sogar wenigstens 350°C höhere Schmelztemperatur als das zweite Materialstück 14, welches aus diesem Grund auch dicker als das erste Materialstück 12 ausgeführt ist.

Die beiden Materialstücke sind im vorliegenden Fall Bleche, die möglichen Werkstoffe hierfür werden am Ende der Beschreibung beispielhaft für sämtliche Ausführungsformen aufgezählt.

Das erste und das zweite Materialstück werden flach nebeneinander auf einen Gegenhalter 16 (siehe Figur 2) gelegt, sodass ihre Unterseiten 18, 20 absatzlos nebeneinanderliegen.

Das erste Materialstück 12 hat eine dem zweiten Materialstück 14 zugewandte Stirnseite 22 sowie eine Oberseite 24.

Wie in Figur 1 zu sehen ist, hat das zweite Materialstück 14 einen randförmigen Fortsatz 28, mit dem es das erste Materialstück 12 überragt und hier überlappt. Bei der dargestellten Ausführungsform liegt vorzugsweise die Stirnseite 22 an der entsprechenden gegenüberliegenden Stirnseite des zweiten Materialstücks 14 an, ebenso liegt die Unterseite des Fortsatzes 28 flächig auf der Oberseite des ersten Materialstücks 12 auf. Derjenige Bereich der Ober- oder Unterseite 24 bzw. 18, der dem überkragenden Abschnitt, hier dem Fortsatz 28, gegenüberliegt, wird im Folgenden flächige Seite 30 des ersten Materialstücks genannt. Die Unterseite 18 und die Oberseite 24 bilden die Seiten mit größerer Fläche verglichen mit der Stirnseite 22.

Figur 1 zeigt auch, dass durch den Fortsatz 28 zur Unterseite hin eine Ausnehmung im zweiten Materialstück 14 gebildet ist, die vom ersten Materialstück 12 ausgefüllt ist.

Das zweite Materialstück 14 hat auf seiner Oberseite 32 bei der gezeigten Ausführungsform ebenfalls eine ebene Gestalt, das heißt, hier ist kein Querschnittssprung im Bereich des Übergangs zum Fortsatz 28 vorhanden.

Die Dicke des ersten Materialstücks 12 im Bereich der flächigen Seite 30 beträgt t1, die Dicke des zweiten Materialstücks 14 im Bereich der Stirnseite 22 t2.

Das Rührreibschweißwerkzeug 10 hat auf diese Abmessungen abgestimmte Geometrien. Diese Geometrien beziehen sich unter anderem auf eine sogenannte Schulter 34, welche eine sich im Wesentlichen radial erstreckende Anlagefläche 36 bildet, mit der das Schweißwerkzeug auf der Oberseite des Werkstücks, das durch die Materialstücke 12, 14 gebildet ist, während des Rührreibschweißverfahrens anliegt.

Darüber hinaus umfasst das Rührreibschweißwerkzeug einen Pin 38, der sich von der Schulter 34 und ihrer Anlagefläche 36 aus zum freien Ende 40 des Pins 38 erstreckt. Der Pin 38 hat eine Pinspitze 42, die sich bis zu einem radialen Absatz 44 erstreckt, sowie einen nachfolgenden vorzugsweise zylindrischen, zweiten Abschnitt 46, der dann bis zur Schulter 34 verläuft.

Die axiale Länge der Pinspitze 42 beträgt h1 bei einem Durchmesser P1. Der zweite Abschnitt 46 hat einen Durchmesser P2, und die Schulter im Bereich der Anlagefläche 36 einen Durchmesser S. Die Länge des Pins 38 von der Anlagefläche 36 bis zum Ende 40 beträgt h2.

Die Abmessungen sind so gewählt, dass:

$$h1 = 0,8 \text{ bis } 1,2 \times t1,$$

$$h2 = 0,8 \text{ bis } 1,2 \times t2,$$

$$(P2-P1)/2 \geq t1$$

und/oder

$$S = 1,5 \text{ bis } 2,5 \times P2 \text{ sind.}$$

Beim Verschweißen wird das Werkzeug 10 in axialer Richtung Y zu den beiden Materialstücken, die eingespannt sein sollten, zugestellt und nach dem Eindringen des Pins in das Material längs einer Bahn oder längs eines Weges verfahren.

In Figur 2 ist zu sehen, dass das Werkzeug 10 in die Materialstücke 12, 14 eingedrungen ist und die beiden Materialstücke miteinander rührverschweißt. Die Lage des Werkzeugs in horizontaler Richtung X sowie in axialer Richtung Y ist so auf die Stirnseite 22 und die flächige Seite 30 abgestimmt, dass die Pinspitze 42 an ihrem Außenumfang sehr nahe längs der Stirnseite 22 verfahren wird und diese allenfalls minimal kontaktiert. In vertikaler Richtung Y wird das Werkzeug 10 so zugestellt, dass der Absatz 44, das heißt seine radiale Anlagefläche 36, nahe an der flächigen Seite 30 entlangfährt und sie allenfalls minimal kontaktiert. Das bedeutet, das Werkzeug 10 dringt allenfalls minimal, wenn überhaupt, in das erste Materialstück 12 ein, um beide Materialstücke 12, 14 miteinander zu verschweißen.

Aufgrund der Form des Pins werden die Materialstücke 12, 14 sowohl stumpfals auch überlappverschweißt, und zwar bei der Ausführungsform nach den Figuren 1 und 2 gleichzeitig. Die Stirnseite 22 wird stumpfverschweißt und die flächige Seite 30 überlappverschweißt.

Die Bahn, längs der das Werkzeug 10 verfahren wird, kann auf verschiedene Weisen definiert werden.

Der Pin 38 wird zu wenigstens 90 %, vorzugsweise zu wenigstens 95 % in dem zweiten Materialstück 14 verfahren, was am einfachsten in der Schnittansicht nach den Figuren 1 und 2 bestimmt werden kann. Die Lage des Pins 38 während des Verfahrweges ist relativ zur Ausgangsposition der Materialstücke 12, 14 nämlich so, dass bei einer Projektion des Pins 38 in die Materialstücke 12, 14 bezogen auf die Position des Werkzeugs 10 beim Verschweißen (Figur 2) 90 % oder mehr Querschnittsfläche des Pins 38 im zweiten Materialstück 14 liegt.

Der Pin und damit das Werkzeug 10 können aber auch ohne Kontakt mit der Stirnseite 22 und der flächigen Seite 30 längs der Stirnseite 22 und der flächigen Seite 30, das heißt längs des Randes des ersten Materialstücks 12 verfahren werden, um den Schweißvorgang durchzuführen.

Die Breite der Bahn, längs der das Werkzeug 10 und der Pin 38 verfahren wird, beträgt +/- 10 % der Dicke t1. Die Mitte dieser Bahn wird durch die Lage der Stirnseite 22 in X-Richtung und die Lage der flächigen Seite 30 in Y-Richtung definiert.

Insbesondere ist vorgesehen, dass die Bahn im Bereich von Kontakt der Stirnseite 22 und/oder der flächigen Seite 30 mit dem Pin 38 bis zu maximal 0,1 mm Eindringtiefe des Pins 38 in das Materialstück 12 liegen sollte.

Um zu vermeiden, dass der Pin 38 zu weit von der Stirnseite 22 entfernt an ihr entlangfährt oder zu tief in das Materialstück 12 eindringt, kann eine Messung der unter dem zweiten Materialstück 14 liegenden Kante des Materialstücks 12 vorgenommen werden, wobei unter "Kante" sowohl die Kante als Übergang der Stirnseite 22 zu entweder der Ober- oder der Unterseite des Materialstücks 12, als auch die Stirnseite 22 selbst fallen sollen. Die Kante des Materialstücks 12 wird hierbei vor oder nach Auflegen des zweiten Materialstücks 14 und/oder vor oder während des Verfahrens des Pins 38 taktil oder berührungslos, z.B. über einen Laserscanner, über Bilderfassung, per Ultraschall oder ein anderes geeignetes Messverfahren gemessen. Abhängig von dieser Messung wird dann die Zustellbewegung des Pins bezogen auf die Richtung zum ersten Materialstück gesteuert oder geregelt. Dabei kann nicht nur die Lage der Kante, sondern auch deren Verlauf über den ganzen oder Abschnitte des zu verschweißenden Bereichs erfasst werden.

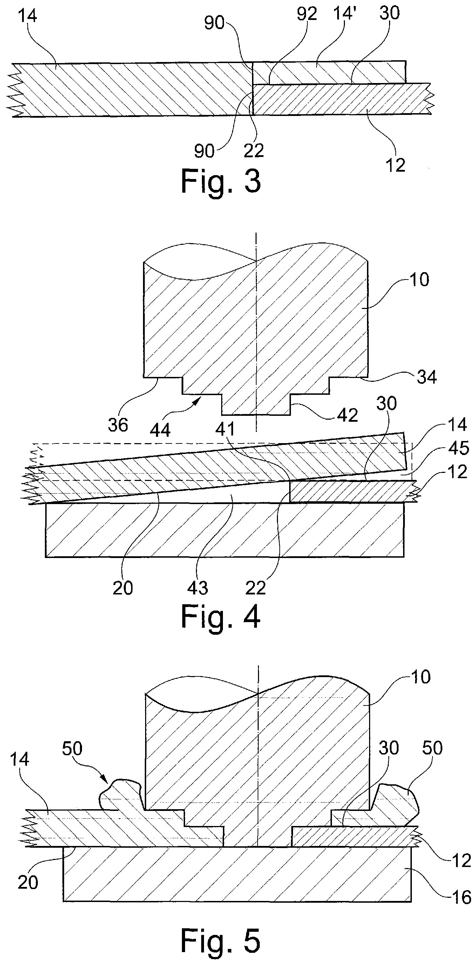

Beispielsweise kann ein Ultraschall-Prüfkopf auch bei schon auf das Materialstück 12 aufgelegtem Materialstück 14 zur Messung verwendet werden. Hierfür wird der Prüfkopf in Bezug auf die Figuren 1 und 4 z.B. rechts neben dem Rand des Materialstücks 14 auf das Materialstück 12 aufgelegt.

Das Werkstück 12 wird vor der Messung in einer Bearbeitungsposition fixiert, dann vermessen und schließlich in der bestehenden Fixierposition verschweißt.

Beim vorliegenden Rührreibverschweißen werden die unterschiedlichen Werkstoffe der Materialstücke 12, 14 nicht durchmischt, was ein wesentlicher Unterschied zum Stand der Technik ist. Dies betrifft im Übrigen sämtliche Ausführungsformen, die nachfolgend noch erläutert werden.

Nach dem Verschweißen der Materialstücke 12, 14 ergibt sich ein Werkstück, bei dem auf der flachen Seite (Unterseite gemäß Figur 1) keine Riffelung an der Außenseite, die in Bezug auf Figur 1 die Unterseite der Materialstücke 12, 14 definiert, sichtbar ist. Dies gilt im Übrigen auch für die anderen Ausführungsformen. Auch hier wird diejenige Seite des Werkstücks, die absatzfrei ausgeführt ist, ohne Riffelung nach dem Rührreibverschweißen sein.

Wichtig ist beim Zustellen des Rührreibschweißwerkzeugs 10 in Richtung Y, dass hier nur so weit zur flächigen Seite 30 zugestellt wird, dass erweichtes Material des zweiten Materialstücks 14 permanent zwischen dem Absatz 44 und der flächigen Seite 30 vorhanden ist, sodass dieses Material als Schmier- und Kühlmittel zur Verfügung steht. Auch dies gilt für die nachfolgenden Ausführungsformen entsprechend.

Natürlich müssen die Materialstücke 12, 14 nicht als ebene Platten ausgeführt sein, die nur im Bereich der Überlappung entsprechend aneinander angepasst sind. Es können auch Werkstücke miteinander verschweißt werden, die beliebige Formen besitzen.

Bei der Ausführungsform nach Figur 3 sind mehrere zweite Materialstücke 14, 14' eingesetzt, die aus gleichem Material oder leicht unterschiedlichem Material sind, in jedem Fall aber eine um wenigstens 250°C niedrigere Schmelztemperatur als das erste Materialstück 12 haben. Bei der Ausführungsform nach Figur 3 ist der Fortsatz 28 gemäß Figur 1 als separates Teil, nämlich durch ein zweites Materialstück 14', gebildet, sodass der entsprechende Absatz oder die entsprechende Vertiefung im Materialstück 14 nicht ausgeführt werden muss, sondern einfach zwei Materialstücke 14, 14' unterschiedlicher Dicke nebeneinandergelegt werden und das Materialstück 14' den Dickenunterschied des ersten Materialstücks 12 zum zweiten Materialstück 14 komplett, das heißt genau, oder im Wesentlichen ausgleicht.

Auch hier ist, wie zuvor schon erwähnt, beim Zustellen des Werkzeugs 10 das Material des Materialstücks 14' stets zwischen dem Absatz 44 und der flächigen Seite 30 vorhanden, sodass das erweichte Material zur Schmierung und Kühlung dient. Mit dem Rührreibverschweißen werden aber auch gleichzeitig das Materialstück 14 und das Materialstück 14' miteinander stumpfverschweißt. Im fertigen Zustand gibt es folglich eine Schicht des zweiten Materialstücks 14', welches mit der flächigen Seite 30 überlappverschweißt ist.

Eine besonders einfache Variante der Erfindung zeigen die Figuren 4 und 5. Hier sind nämlich weder zwei zweite Materialstücke 14, 14' notwendig noch ein zweites speziell geformtes Materialstück 14, wie es in Figur 1 gezeigt ist, das mit einer Ausnehmung oder einem Absatz ausgeführt ist, um das erste Materialstück 12 darin aufzunehmen. Beide Materialstücke sind zumindest in ihrem angrenzenden Bereich im Wesentlichen oder komplett flach, das heißt blechartig ausgeführt oder sind insgesamt zwei im Wesentlichen im Schweißbereich oder komplett ebene Bleche.

Das zweite Materialstück 14 wird einerseits auf den Gegenhalter 16 aufgelegt und andererseits auf das erste Materialstück im Bereich der eventuell auch gerundeten Übergangskante 41 zwischen der Stirnseite 22 und der flächigen Seite 30. Somit verläuft das zweite Materialstück vom Gegenhalter aus schräg aufwärts und damit in diesem Bereich zur Stirnseite 22 gegenüberliegend, wenn auch unter Bildung eines Spalts 43. Ab Erreichen der Übergangskante 41 überlappt das zweite Materialstück 14 das erste Materialstück 12 und verläuft gegenüberliegend zur flächigen Seite 30, auch hier unter Bildung eines Spalts 45. Die Spalte 43 und 45 sind jedoch für das Verfahren zum Rührreibverschweißen nicht relevant, denn das Werkzeug 10 wird axial, d. h. in Richtung Y so gegen das zweite Materialstück 14 verfahren, dass dieses verformt wird und die Unterseite 20 vollflächig am Gegenhalter 16 aufliegt und, nach dem Überlappverschweißen, auch vollflächig an der flächigen Seite 30 angeschweißt ist. Dies ist in Figur 5 zu sehen. Auch im Bereich der Stirnseite 22 ergibt sich der zuvor bereits erläuterte Stumpfstoß, d. h. die Stumpfverschweißung, sodass auch hier der Spalt 43 keinen Nachteil für die Durchführung des Verfahrens darstellt. Verdrängtes Material 50 wird gegebenenfalls anschließend abgetrennt.

Wie in den übrigen Ausführungsformen so entsteht auch hier ein Werkstück, bei dem über die gesamte Fläche unterhalb der Schulter 34 im Bereich der flächigen Seite 30 eine Überlappverschweißung und zudem längs der gesamten Stirnseite 22 eine Stumpfstoßverschweißung stattfindet.

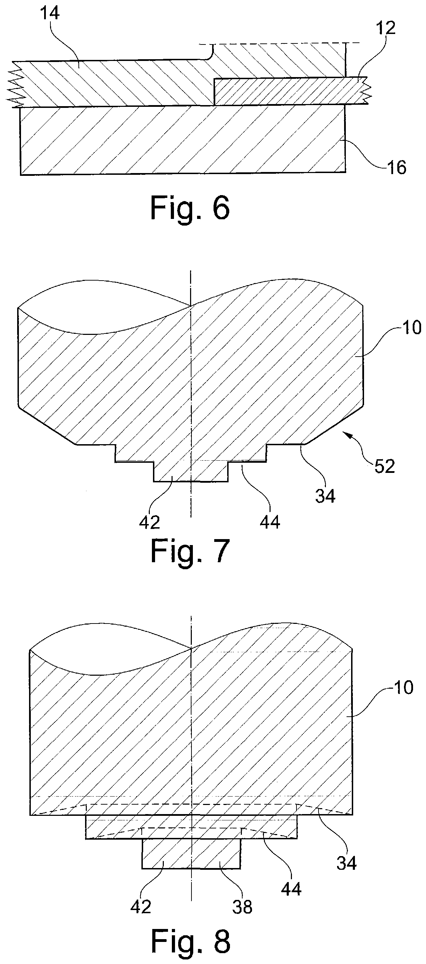

Während bei der Ausführungsform nach den Figuren 4 und 5 das schräg auf das erste Materialstück 12 aufgelegte zweite Materialstück ausschließlich unter Einwirkung des Drucks und der Rotation des Werkzeugs 10 verformt wird, ist bei der Ausführungsform nach Figur 6 ein Zwischenschritt vorgesehen. Nachdem nämlich das zweite Materialstück 14 wie in Figur 4 zu sehen auf das erste Materialstück 12 schräg aufgelegt wurde, wird es mittels eines Presswerkzeugs gegen den Gegenhalter 16 gepresst und dabei umgeformt, sodass die Spalte 43, 45 durch das Material des zweiten Materialstücks 14 ausgefüllt oder reduziert werden. Beispielsweise kann sich dadurch auch ein Absatz, der auf der Oberseite des zweiten Materialstücks 14 vorsteht, in dem zweiten Materialstück 14 ergeben. Nach diesem verfahrensmäßigen Zwischenschritt wird dann reibverschweißt, wie es beispielsweise Figur 5 zeigt. Dieser Umformschritt kann beispielsweise auch durch eine Walze oder eine Matrize wie bei einem Prägevorgang erfolgen und nicht nur, wie in Figur 5 dargestellt, durch das Werkzeug 10.

Alternativ hierzu kann das zweite Materialstück nicht auf den Gegenhalter 16 aufgelegt werden und schräg aufwärts bis über das Materialstück 12 verlaufen, sondern parallel und über dem Materialstück 12 angeordnet sein. Das Werkzeug 10 deformiert das zweite Materialstück 14 aber entsprechend und sorgt auch für die Verschweißung gemäß Figur 5.

Figur 7 zeigt eine Variante des Werkzeugs 10, bei der die Schulter 34 am Außenrand konisch von der Pinspitze 42 wegweisend abgeschrägt ist. Die entsprechende Abschrägung 52 dient als Einlaufzone und kann insbesondere bei nicht-vorgeprägten zweiten Materialstücken 14, wie dies beispielsweise in Figur 4 dargestellt ist, als Einlaufzone dienen. D. h., dass beim Verfahren des Werkzeugs 10 der an das Werkzeug 10 angrenzende Bereich des Materialstücks 14 in die Einlaufzone, die durch die Abschrägung 52 gebildet ist, hineingedrückt und in Richtung Y zum Gegenhalter 16 plastisch verformt wird, wobei hier natürlich auch u. U. die Temperaturerhöhung mit zunehmender Nähe zur virtuellen Drehachse des Pins 38 bei der Umformung hilft. Die Einlaufzone kann nicht nur durch eine Schräge, sondern auch durch einen Radius oder eine Spiral- oder Schneckenform des Werkzeugs in diesem Bereich realisiert werden.

Figur 8 zeigt eine weitere Variante des Werkzeugs 10, bei welcher sowohl eine konisch abgeschrägte Schulter 34 als auch ein Absatz 44 mit konkaver Radialfläche ausgeformt sind. Hier kann jeweils ein Winkel zwischen 0° und 20° zur entsprechenden Radialfläche realisiert werden.

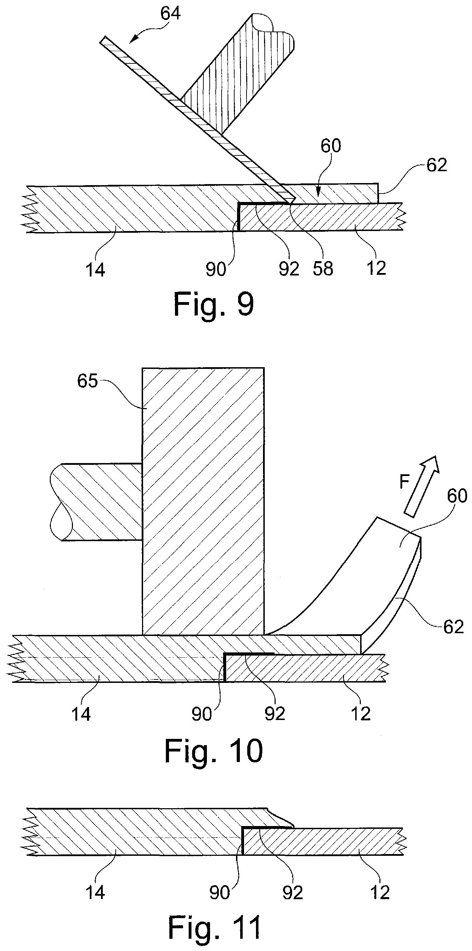

Natürlich muss nicht der gesamte über das Materialstück 12 überstehende Teil des zweiten Materialstücks 14 überlappverschweißt werden. Bei der Ausführungsform nach Figur 9 wird der überlappende Abschnitt des zweiten Materialstücks nur bis zu einer Linie 58 mit dem Materialstück 12 verschweißt, sodass sich ein nicht-verschweißter Randstreifen 60 bis zum sogenannten freien Endrand 62 des zweiten Materialstücks im überlappenden Bereich ergibt. Dieser Randstreifen 60 wird z. B. spanend entfernt, z. B. mittels eines Scheiben-, Form- oder Fingerfräsers 64. Dadurch werden Kosten und Gewicht für das Werkstück gespart und Kerbspannungen, die die Schwingfestigkeit beeinträchtigen können, reduziert.

Alternativ kann ein Abtrennen des Randstreifens 60 auch durch eine oder mehrere nacheinander folgende, nicht-rotierende Schneiden erfolgen, bei der die einzelnen Schneiden eine zunehmende Schneidtiefe haben. In den Figuren 10 und 11 ist dargestellt, dass der Randstreifen 60 auch abgerissen werden kann, indem beispielsweise eine Stütz- oder Schneidrolle 65 gegen den verschweißten, überlappenden Abschnitt des Materialstücks 14 drückt und durch Aufbringen einer Kraft F der Randstreifen 60 abgerissen wird, sodass sich das in Figur 11 dargestellte Werkstück ergibt. Das Abreißen reduziert die Gefahr, dass durch eine spanende Bearbeitung das erste Materialstück 12 verletzt wird.

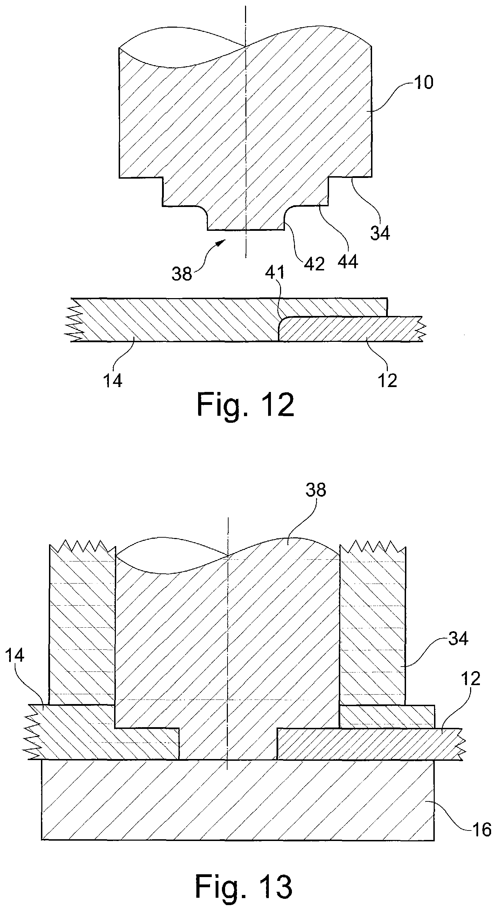

Da das erste Materialstück 12 steifer als das zweite Materialstück 14 ist, kommt es am Übergang der Materialstücke, insbesondere an der in Figur 4 zu sehenden Übergangskante 41 zu einer Spannungsüberhöhung. Durch Abrunden der Kante 41, wie dies in Figur 12 gezeigt ist, und einen entsprechend geformten abgerundeten Übergang zwischen der Pinspitze 42 und dem Absatz 44 lässt sich die Deformation des ersten Werkstücks 12 reduzieren. Alternativ kann auch die Übergangskante 41 ungerundet bleiben und der Übergang zwischen Pinspitze 42 und Absatz 44 gerundet sein. Dann wird die Übergangskante 41 umgeformt, wenn sie vom Pin bearbeitet wird.

Das verschweißte Werkstück ist in Figur 12 bereits zu sehen.

Wie zuvor bereits ausführlich erläutert, kann die Schulter 34 rotierend oder nicht-rotierend sein oder einstückig in den Pin 38 übergehen.

Bei der Ausführungsform nach Figur 13 ist die Schulter 34 separat ausgeführt, d. h. der Pin 38 ragt durch die hülsenartig endende Schulter 34 hindurch.

Bei den zuvor gezeigten Ausführungsformen des Werkzeugs 10, bei denen der Pin 38 einstückig in die Schulter überging, ergab sich ein großer Durchmesser der Schulter und damit eine verhältnismäßig breite Schweißnaht.

Bei der Ausführungsform nach Figur 13 hingegen ist die Schulter 34 entweder nicht-rotierend oder langsam drehend. Trotz eines verhältnismäßig im Durchmesser großen Pins 38 können damit relativ schmale Schweißnähte erzeugt werden. Ein zusätzlicher Vorteil der Ausführungsform nach Figur 13 besteht in der geringen Wärmeeinbringung durch die nicht-rotierende Schulter. Die Wärmeeinflusszone kann somit verringert und die Festigkeit der Schweißnaht gesteigert werden.

Um unterschiedlich dicke zweite Materialstücke 14 mit einem stets konstant dicken ersten Materialstück 12 verschweißen zu können, lässt sich die Schulter 34 relativ zum Pin 38 axial verschieben. Die Kraftaufbringung kann in diesem Fall über einen Aktuator oder eine vorgespannte Feder erfolgen.

Insgesamt ergeben sich drei Bereiche von Pin 38 und Schulter 34, nämlich der Bereich der Pinspitze 42, der Bereich des Absatzes 44 sowie der Bereich der Schulter 34 mit der entsprechenden Anlagefläche 36. Diese drei Abschnitte lassen sich beliebig miteinander kombinieren. Wie bereits erläutert, kann die Schulter 34 einstückig in den Pin 38 übergehen, oder die Schulter 34 kann, wie in Figur 13 gezeigt, separat vom Pin 38 ausgeführt werden. Darüber hinaus kann natürlich auch die Schulter 34 einstückig mit dem Absatz 44 verbunden sein und separat hiervon der Pin 38 rotieren, wobei in diesem Fall auch die Schulter 34 mit dem Absatz 44 rotieren muss, um die Überlappverschweißung herzustellen.

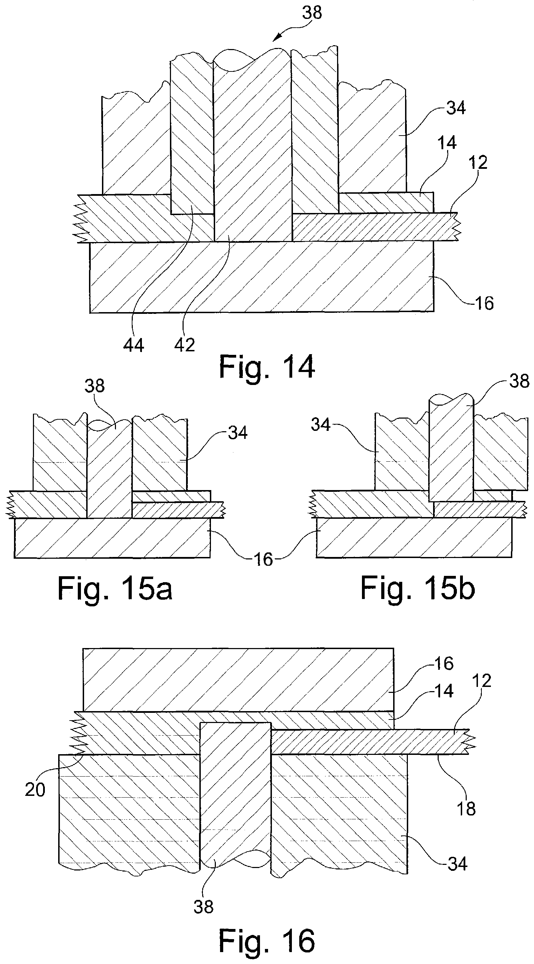

Figur 14 zeigt, dass die drei Bereiche durch drei verschiedene Teile ausgeführt werden. Die Schulter 34 ist beispielsweise wie in Figur 13 ausgeführt, der Pin 38 jedoch zweigeteilt. Ein innerer Teil bildet die Pinspitze 42 und ein sich daran anschließender, hülsenförmiger zweiter Teil den Absatz 44, der unabhängig von der Pinspitze 42 rotiert. Die drei Teile können axial ebenfalls beliebig zueinander bewegt werden, um unterschiedliche Dicken der Materialstücke 12, 14 ausgleichen zu können. Auch hier kann natürlich die Schulter 34 ebenfalls drehen, beispielsweise unabhängig von der Pinspitze 42 und dem Absatz 44.

Während in den zuvor beschriebenen Ausführungsformen des Verfahrens die Überlapp- und die Stumpfstoßverschweißung gleichzeitig mit einem Pin erfolgten, wird bei der Ausführungsform nach den Figuren 15a und 15b ein sequenzielles Überlapp- und Stumpfstoßverschweißen beispielsweise mittels desselben Pins vorgeschlagen. Gemäß Figur 15a wird der Pin zur Schulter 34 tiefer zugestellt, sodass er die Stumpfstoßverschweißung durchführt. Anschließend wird der Pin 38 gegenüber der Schulter 34 etwas zurückgezogen, und er steht damit weniger gegenüber der Schulter 34 vor. In dieser Stellung erfolgt dann die Überlappverschweißung, wie dies in Figur 15b dargestellt ist.

Generell ist natürlich die Verstellbarkeit des Pins 38 relativ zu einer feststehenden oder generell davon getrennten Schulter 34 vorteilhaft, um die Eindringtiefe des Pins 38 in die Materialstücke 12, 14 exakt festlegen zu können und zu vermeiden, dass der Pin 38 mit seinem Ende 40 den Gegenhalter 16 kontaktiert. Die Ausführung nach Figur 14 ermöglicht eine Positionssteuerung der Schulter 34, der Pinspitze 42 und des Absatzes 44 relativ zueinander und zum Werkstück.

Als Variante zur Ausführung nach Figur 15a kann der Stumpfstoß nach Figur 16 natürlich auch von der Unterseite 18, 20 aus erfolgen. Dies hat den Vorteil, dass die Stumpfstoßverbindung nicht durchgeschweißt werden muss. Damit entfällt auch die Gefahr, dass der Gegenhalter 16 in Kontakt mit dem Pin 38 kommt. Auch Dickenschwankungen der Materialstücke 12, 14 können bei dieser Variante leichter ausgeglichen werden.

Selbst wenn die Schulter 34 gegenüber dem Pin 38 ein separates Teil ist, kann sie sich u. U. langsam drehen, um einem Festkleben der Schulter entgegenzuwirken und die Prozesskräfte in Vorschubrichtung zu reduzieren.

Zum Herstellen von sogenannten Tailor Blanks aus Bandmaterial ist ein Werkzeug besonders günstig, durch das das Material hindurchläuft und bei dem das Schweißwerkzeug in Vorschubrichtung nicht bewegt wird, sondern nur das Bandmaterial. Der entsprechende Gegenhalter 16 ist in diesem Fall vorzugsweise eine Walze mit großem Walzendurchmesser, wobei natürlich auch seitliche Stützelemente in Form von Rollen oder dergleichen ein Ausweichen der Werkstücke zueinander verhindern können. Optimal ist in diesem Zusammenhang natürlich auch, wenn die zuvor erwähnten nicht verschweißten Randstreifen gleich automatisch abgetrennt werden können.

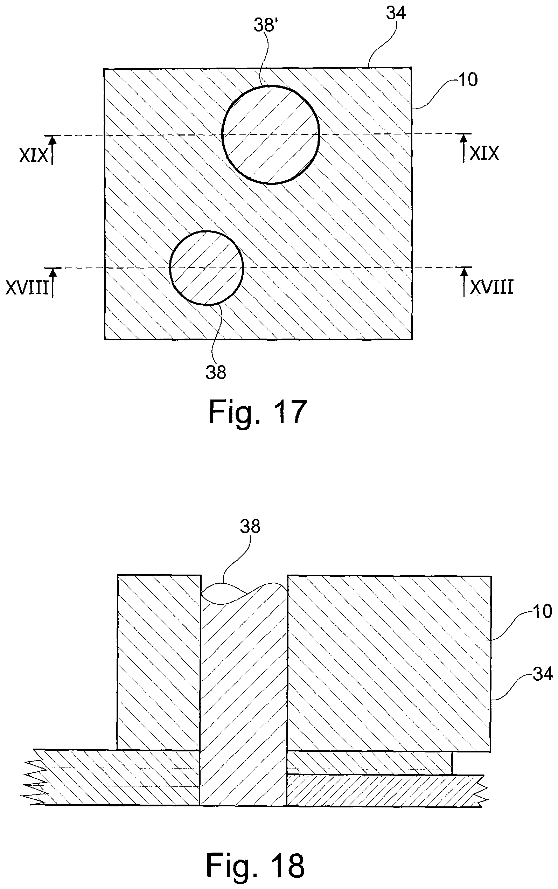

Eine Variante zur sequenziellen Stumpfstoß- und Überlappverschweißung gemäß den Figuren 15a und 15b ist in den Figuren 17 bis 19 dargestellt. Hierbei sind in einem Werkzeug 10 zwei leicht seitlich und leicht in Vorschubrichtung hintereinander vorgesehene Pins 38 angeordnet, die dieselbe Schulter 34 nutzen. Ein Pin 38 ist dabei für den Stumpfstoß und ein Pin 38' für die Überlappverschweißung zuständig. Beide Pins 38, 38' lassen sich über einen gemeinsamen Motor oder separat antreiben.

Vorzugsweise wird der Pin 38 positionsgesteuert oder positionsgeregelt und der Pin 38' kraftgeregelt verfahren.

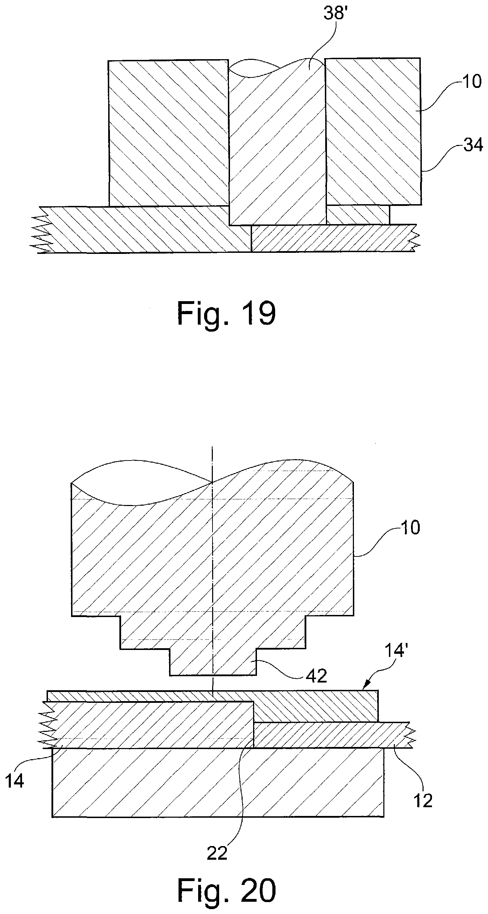

Die Variante nach Figur 20 ist eine Alternative zur Ausführung nach Figur 3, bei der zwei zweite Materialstücke 14, 14' verwendet werden, wobei hier das Materialstück 14 ebenfalls nur bis zur Stirnseite 22 reicht, wogegen das Materialstück 14' für die Überlappverschweißung zur Verfügung steht. Als Unterschied zur Figur 3 überlappt jedoch das Materialstück 14' auch noch das Materialstück 14, sodass in diesem überlappenden Bereich zusätzlich auch noch eine Überlappverschweißung erzeugt wird, und zwar zwischen den Materialstücken 14 und 14'. Das Materialstück 14' lässt sich hier besonders einfach durch ein Extrusionsprofil erzeugen. Bei dieser Variante wird die Verbindungsfestigkeit noch einmal erhöht, insbesondere können hier hochfeste Aluminiumlegierungen für die Extrusionsprofile eingesetzt werden.

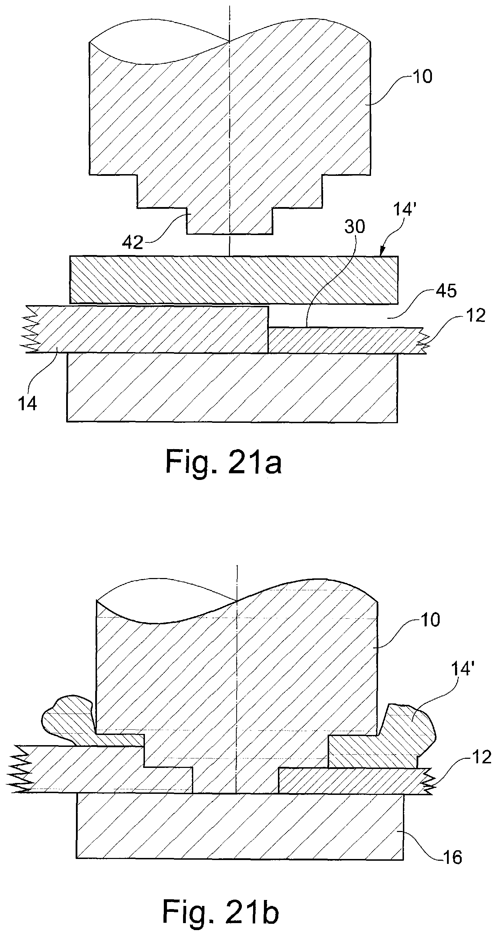

Als Alternative zu diesen Extrusionsprofilen lässt sich das Materialstück 14' auch als ebenes Blech ausführen, das auf dem Materialstück 14 aufliegt, sodass ein Spalt 45 zwischen der Seite 30 und der Unterseite des Materialstücks 14' entsteht, der aber beim Rührreibverschweißen eliminiert wird, wie Figur 21b zeigt.

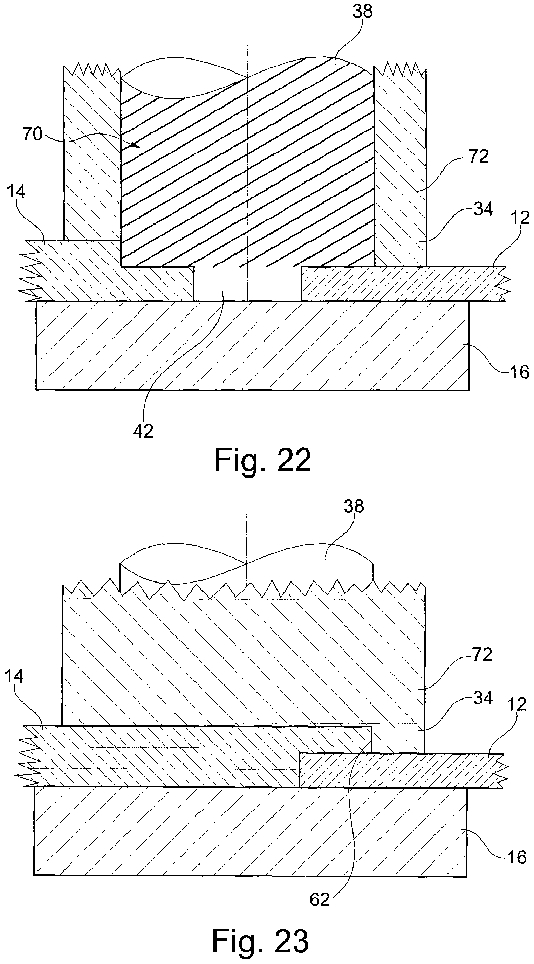

Figur 22 zeigt eine Ausführungsvariante mit einer nicht-rotierenden Schulter 34, bei der aber ein zusätzlicher Werkstoff über eine förderwirksame Struktur 70 auf dem Außenumfang des Pins 38 Material zur Pinspitze 42 transportiert, welches zur Verschweißung dient.

Bei der Ausführungsform nach den Figuren 22 und 23 besitzt die Schulter 34 einen nach unten vorstehenden Fortsatz 72, welcher an den Endrand 62 angrenzt und der die sogenannte Rührzone begrenzt. Damit entsteht kein unverschweißter Randstreifen, wie er in Figur 9 dargestellt ist. Die Schulter 34 ist bei dieser Ausführungsform natürlich nicht drehend. Die Varianten nach den Figuren 22 und 23 können natürlich auch miteinander kombiniert werden. Ferner ist es auch möglich, eine förderwirksame Struktur 70 an der Innenseite der hülsenförmigen Schulter 34 vorzusehen.

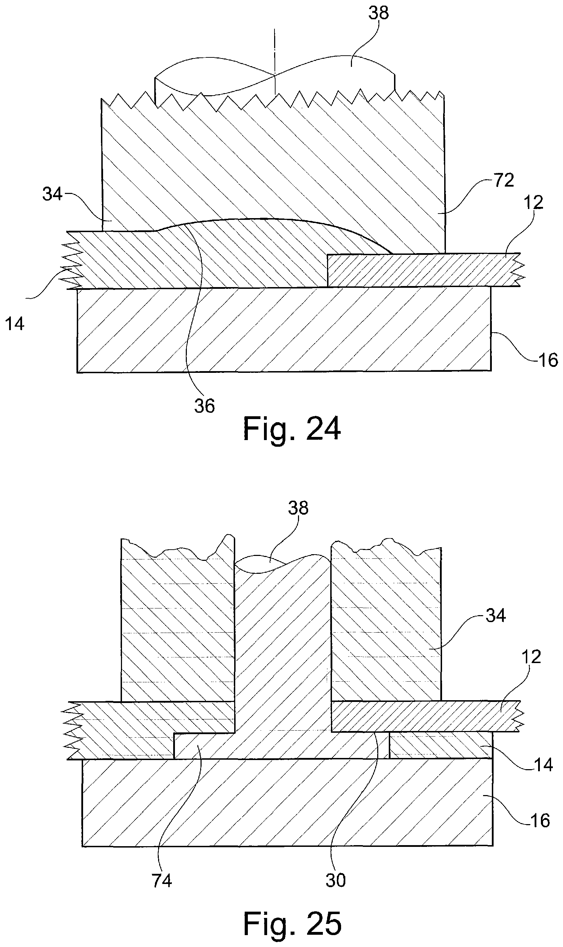

Die Ausführungsform nach Figur 24 unterscheidet sich von der nach Figur 23 dadurch, dass die Schulter 34 auf ihrer Anlagefläche 36 eine optimierte Fläche oder Form hat, wobei auch hier ein Fortsatz 72 vorhanden ist. Die Form der Schulter 34, besser gesagt ihrer Anlagefläche 36 ist hier leicht konkav, sodass sich in der Mitte eine größere Dicke der Schweißnaht ergibt als an den Rändern. Ferner läuft das zweite Materialstück im Überlappbereich kontinuierlich auf Dicke 0 aus.

Aufgrund von Montagereihenfolgen und mangelnder Zugänglichkeit kann u. U. ein Verschweißen von der dem ersten Materialstück 12 gegenüberliegenden Seite unmöglich sein. In einem solchen Fall kann die in Figur 25 gezeigte Variante mit einem sogenannten umgedreht abgesetzten Pin 38 eingesetzt werden, der an seinem Ende eine scheibenförmige Erweiterung 74 besitzt. Diese dient der Überlappverschweißung, wogegen der angrenzende Teil des Pins der Stumpfstoßverschweißung dient. Beim Eintauchen in das Material sollte der Pin 38 zuerst in das weiche, zweite Materialstück 14 eintauchen und dann erst an das erste Materialstück 12 heranfahren, um einen vorherigen Kontakt mit diesem zu vermeiden oder zu minimieren. Wie auch bei den übrigen Ausführungsformen so gilt auch hier, dass bevorzugt stets der Werkstoff des zweiten Materialstücks zwischen dem Werkzeug, hier der Erweiterung 74 und der Seite 30 des ersten Materialstücks, an der die Überlappverschweißung stattfindet, vorhanden sein sollte.

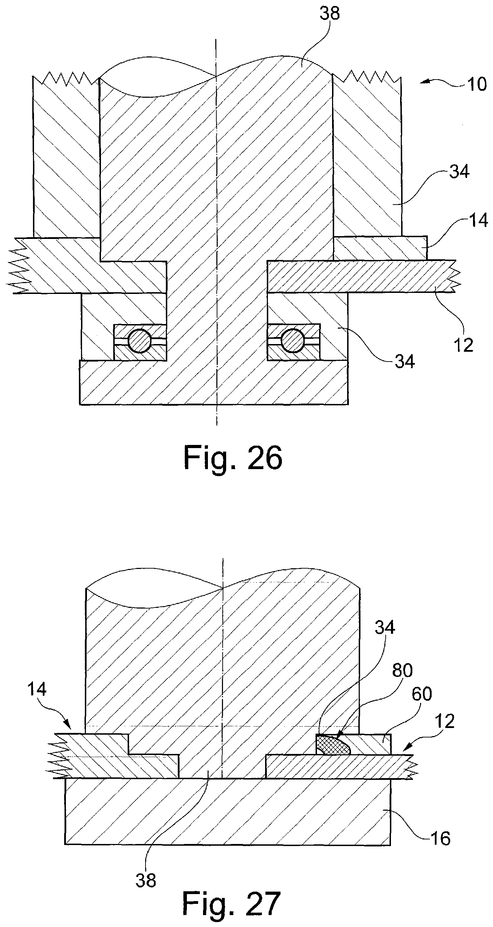

Es gibt Beispiele von Werkstücken, bei denen nicht mit Gegenhaltern geschweißt werden kann. Eine solche Variante mit einem Doppelschulterwerkzeug mit abgesetztem Pin 38 ist in Figur 26 dargestellt. Aufgrund des internen Kraftflusses heben sich die Axialkraftkomponenten beider Schultern 34 auf. Figur 26 zeigt also eine Variante, bei der ohne Gegenhalter das erste Materialstück 12 mit dem zweiten Materialstück 14 verschweißt wird.

Die nachfolgenden Figuren zeigen noch einige vorteilhafte Varianten zu den bereits zuvor erwähnten Ausführungsformen.

So zeigt Figur 27, dass zum besseren Abreißen (siehe Figur 10) des nichtverschweißten Randstreifens 60 bewusst eine längs der Schweißlinie verlaufende Schlauchpore 80 eingebracht werden kann, und zwar am Übergang zwischen Pin 38 und Schultern 34. Diese Schlauchpore wirkt wie eine Perforierung.

Alternativ hierzu könnte natürlich auch der unverschweißte Randstreifen 60 an das erste Materialstück 12 angeklebt werden, um die Spaltkorrosionsanfälligkeit zu reduzieren.

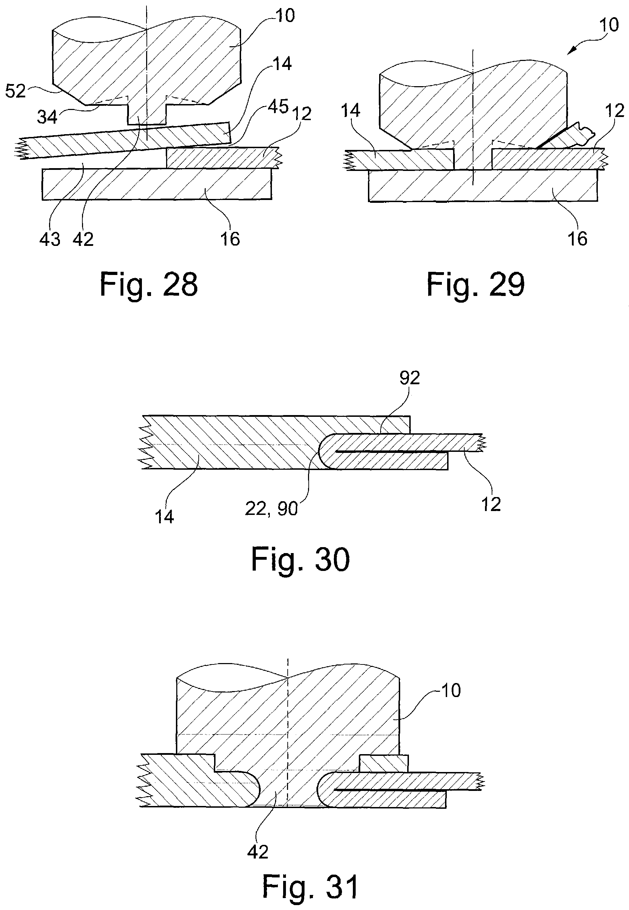

Die Figuren 28 und 29 zeigen eine Variante der Ausführungsform nach den Figuren 4 bzw. 5, bei der die Dicke der beiden Materialstücke 12, 14 gleich oder im Wesentlichen gleich ist. Als Werkzeug wird hier ein Pin ohne Absatz verwendet, bei dem die Schulter 34 einerseits mit der Abschrägung 52 und andererseits mit einer konkaven Einbuchtung an der Anlagefläche 36 versehen ist, wie sie in Figur 8 dargestellt ist. Auch hier könnte natürlich das zweite Materialstück 14 vorgeprägt sein oder angedrückt werden, bevor es verschweißt wird. Ein Vorwärmen des überlappenden Teils des zweiten Materialstücks 14 z. B. über Induktion ist vorteilhaft, um die Verformung des zweiten Materialstücks im Überlappbereich und im Bereich der Spalte 43, 45 zu unterstützen.

Um große laterale Toleranzen bei der Positionierung der Materialstücke 12, 14 zuzulassen, ist generell eine Querkraftregelung des Werkzeugs besonders günstig. Das bedeutet, das Werkzeug 10 wird nach dem Eindringen in die Materialstücke 12, 14 längs der gewünschten Schweißnaht verfahren. Die Position quer zur Längsrichtung der Schweißnaht ist so gewählt, dass die Kraft in dieser Richtung konstant ist und einem vorgegebenen Wert entspricht. Die Kraft quer zur Längsrichtung der Schweißnaht ist also die Regelgröße, während die Position längs der Schweißrichtung, d. h. längs der Schweißnaht, eine Steuergröße darstellt.

Die Figuren 30 und 31 zeigen die Materialstücke 12, 14, wobei das Materialstück 12 an seinem freien, zu verschweißenden Rand durch Umbiegen oder Umbördeln oder Falzen verdickt ist. Die Stirnseite 22 ergibt sich damit im Bereich der Faltung. Dieser Bereich ist üblicherweise herstellungsbedingt im Querschnitt gerundet, wobei dann die Pinspitze 42 vorzugsweise komplementär geformt ist, d. h. eine konvexe Umfangswand besitzt.

Das entsprechend verschweißte Werkstück ist in Figur 30 zu sehen.

Generell gilt auch hier für alle Ausführungsformen noch Folgendes:
Wenn das erste Materialstück 12 beschichtet ist, beispielsweise im Bereich der flächigen Seite 30, so wird das Rührreibschweißwerkzeug 10 beim Schweißen axial so zugestellt, dass diese Schicht im nicht-verschweißten Bereich intakt bleibt, um als Schutz gegen Korrosion weiterhin wirken zu können.

Als Materialien werden vorzugsweise für das erste Materialstück Stahl und das zweite Materialstück Aluminium oder Kupfer bzw. seine Legierungen verwendet oder für das erste Materialstück Kupfer und das zweite Materialstück Aluminium oder Legierungen hiervon. Die Materialien können unter anderem als Knetwerkstoffe oder auch als Gusswerkstoffe vorliegen. Die Beschichtung ist insbesondere, was das Materialstück 12 aus Stahl anbelangt, Zink.

Durch die Überlappung der beiden Materialstücke 12, 14 vor dem Schweißen wird für den Schweißprozess ausreichend Material zur Verfügung gestellt, was zudem die Bildung von Schlauchporen reduziert und eine gute Anbindung der Werkstoffe erleichtert. Durch die Überlappung können große laterale Toleranzen, also Toleranzen in X-Richtung zwischen den Materialstücken 12, 14 zugelassen werden, d. h. dass die Stirnseite 22 keinen oder nur abschnittsweise Kontakt mit dem zweiten Materialstück 14 auf ihrer gesamten Länge vor dem Verschweißen haben kann.

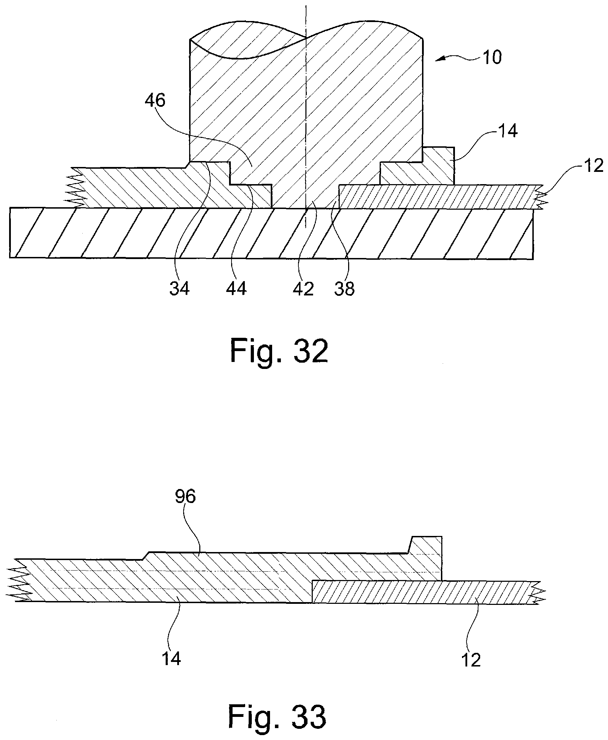

Bei der Ausführungsform nach den Figuren 32 und 33 wird ein Pin 38 verwendet, der einen überlangen Abschnitt 46 hat. Der sich vom Absatz 44 bis zu einer Schulter 34 erstreckende Abschnitt 46 hat eine axiale Länge h3 (siehe Fig. 1), wobei die axiale Länge h3 und die Dicken t2 und t1 des zweiten Materialstücks 14 und des ersten Materialstücks 12 so aufeinander abgestimmt sind, dass die axiale Länge h3 größergleich der Differenz der Dicken t2 - t1 ist und eine vorstehende Schweißnaht erzeugt wird. Dieses Verfahren wird insbesondere bei zwei zu verschweißenden Blechen verwendet, die gemäß Figur 4 übereinander liegen, d.h. allgemein, dass das Materialstück 14 keine zum Materialstück 12 an dessen Rand komplementäre Ausnehmung, wie sie in Figur 1 gezeigt ist, besitzt, so dass beim Schweißen zusätzliches Material zur Verfügung steht.

In Fällen, in denen das zweite Materialstück 14 eine zum ersten Materialstück 12 an dessen Rand komplementäre Ausnehmung, wie in Fig 1 gezeigt, besitzt, können zusätzliche Blechlagen oder angeformte Verdickungen (siehe z.B. Verdickung 98 in Figur 1 mit unterbrochenen Linien) des zweiten Materialstücks 14 in dem das Materialstück 12 überlappenden, zu verschweißenden Bereich verwendet werden, so dass zusätzliches Material zur Erzeugung einer vorstehenden Schweißnaht zur Verfügung steht.

Dieses Material füllt den Bereich bis zur Schulter 34 aus (siehe Figur 32), so dass eine vorstehende Schweißnaht 96 (siehe Figur 33) entsteht. Die Erhöhung der Schweißnaht 96 ergibt sich vorzugsweise nicht aus zusätzlichen Blechlagen oder angeformten Verdickungen, sondern aus der ursprünglichen Überlappung der Materialstücke 12, 14, insbesondere der Bleche. Diese Variante ist natürlich auch mit den anderen Varianten, die zuvor erläutert wurden, kombinierbar.

In beiden Fällen, sowohl mit komplementärer Ausnehmung als auch ohne komplementäre Ausnehmung, kann dieses zusätzliche Material zudem genutzt werden, um einen zwischen der Stirnseite 22 des ersten Materialstücks 12 und der entsprechenden gegenüberliegenden Stirnseite des zweiten Materialstücks 14 möglicherweise vorhandenen Spalt aufzufüllen und zu schließen.

Die Figuren 3, 9, 10, 11 und 30 zeigen erfindungsgemäße verschweißte Werkstücke. Gut erkennbar ist, dass hier sowohl die Stirnseite 22 als auch die flächige Seite 30 ihre ursprüngliche Geometrie behalten haben, sodass die Stumpfstoßschweißnaht oder ihr Schweißbereich 90 tatsächlich von der Überlappschweißnaht 92 oder deren Schweißbereich abgrenzbar ist (L-förmiger Verlauf der Schweißnähte oder Schweißbereiche zueinander). Hier kann es entweder gar keine Durchmischung der Werkstoffe geben oder eine minimale, sehr dünne Diffusionsschicht von maximal 0,5 mm Dicke, vorzugsweise maximal 0,1mm oder sogar nur maximal 0,05 mm Dicke entsteht beim Ankratzen (entspricht Schweißbereich 90 und Naht 92).

## Patentansprüche

1. Verfahren zum Rührreibverschweißen eines ersten Materialstücks (12) mit zumindest einem zweiten Materialstück (14, 14'), wobei das erste Materialstück (12) eine Stirnseite (22) und eine angrenzende flächige Seite (30), die eine Ober- oder eine Unterseite (24, 18) des ersten Materialstücks (12) bildet, und eine um wenigstens 250°C höhere Schmelztemperatur als das zumindest eine zweite Materialstück (14, 14') hat, **gekennzeichnet durch** folgende Schritte:

a) das erste Materialstück (12) wird durch zumindest ein zweites Materialstück (14, 14') abschnittsweise angrenzend an die Stirnseite (22) so überlappt, dass an die flächige Seite (30) und vorzugsweise seitlich der Stirnseite (22) zumindest das oder eines der zweiten Materialstücke (14, 14') angrenzt, und
b) durch ein Rührreibschweißwerkzeug (10) mit einem sich drehenden Pin (38) wird das erste Materialstück (12) mit dem oder einem der zweiten Materialstücke (14, 14') stumpf- und überlappverschweißt, indem der Pin (38) längs der Stirnseite (22) verfahren wird und das Werkzeug (10) längs der flächigen Seite (30) im angrenzenden zweiten Materialstück (14, 14') verfahren wird.

2. Verfahren nach Anspruch 1, **dadurch gekennzeichnet, dass** der Pin (38) zu wenigstens 90%, vorzugsweise zu wenigstens 95% in dem zweiten Materialstück (14, 14') verfahren wird, insbesondere dass der Pin (38) vollständig im wenigstens zweiten Materialstück (14, 14'), ohne Kontakt mit der Stirnseite (22) und/oder der flächigen Seite (30) verfahren wird, und/oder dass der Pin (38) und/oder ein Absatz (44) des Pins (38) beim Schweißvorgang längs einer Bahn verfahren wird, die einerseits durch den Verlauf der Stirnseite (22) bzw. der flächigen Seite (30) des ersten Materialstücks (12), bezogen auf den noch nichtverschweißten Zustand, definiert wird und andererseits eine Bahnbreite besitzt, die +/- 10% der Dicke (t1) des nicht verschweißten ersten Materialstücks (12) im Bereich der Stirnseite (22) beträgt, insbesondere dass die Bahn im Bereich von Kontakt bis zu maximal 0,1mm Eindringtiefe in das erste Materialstück (12) liegt.

3. Verfahren nach Anspruch 1 oder 2, **dadurch gekennzeichnet, dass** beim Rührreibverschweißen die unterschiedlichen Werkstoffe der Materialstücke (12, 14, 14') nicht durchmischt werden oder dass eine Diffusionsschicht von maximal 0,5 mm Dicke, vorzugsweise maximal 0,1mm oder maximal 0,05 mm Dicke beim Ankratzen entsteht.

4. Verfahren nach einem der vorhergehenden Ansprüche, **dadurch gekennzeichnet, dass** der Pin (38) einen Absatz (44) hat, welcher der flächigen Seite (30) zugewandt ist und für die Überlappverschweißung gleichzeitig mit der durch die vom Absatz (44) abstehende Pinspitze (42) erzeugten Stumpfstoßverschweißung sorgt.

5. Verfahren nach Anspruch 4, **dadurch gekennzeichnet, dass** ein Pin (38) verwendet wird, der eine Pinspitze (42), die sich bis zum Absatz (44) erstreckt, und einen sich vom Absatz (44) bis zu einer Schulter erstreckenden Abschnitt (46) mit einer axialen Länge (h3) hat, wobei die axiale Länge (h3) und die Dicke (t2) des zweiten Materialstücks (14, 14') und die Dicke (t1) des ersten Materialstücks (12) so aufeinander abgestimmt sind, dass die axiale Länge (h3) größergleich der Differenz der Dicke (t2) des zweiten Materialstücks (14, 14') minus der Dicke (t1) des ersten Materialstücks (12) ist und eine vorstehende Schweißnaht (96) erzeugt wird.

6. Verfahren nach einem der vorhergehenden Ansprüche, **dadurch gekennzeichnet, dass** das Rührreibschweißwerkzeug (10) nur soweit in Richtung zur flächigen Seite (30) zugestellt wird, dass erweichtes Material des zumindest einen zweiten Materialstücks (14, 14') permanent zwischen der Schulter (34) und der flächigen Seite (30) des ersten Materials vorhanden ist.

7. Verfahren nach einem der vorhergehenden Ansprüche, **dadurch gekennzeichnet, dass** der Pin (38) eine Pinspitze (42) mit einer axialen Länge (h1), gemessen vom Pinende (40) bis zu einem Absatz (44) des Pins (38), hat, die im Wesentlichen der Dicke (t1) des ersten Materialstücks (12) an dessen Stirnseite (22) entspricht.

8. Verfahren nach einem der vorhergehenden Ansprüche, **dadurch gekennzeichnet, dass** ein zweites Materialstück (14, 14') zumindest im Schweißbereich plattenförmig ausgebildet ist und relativ zum ersten Materialstück (12) schräg zur Stirnseite (22) längs einer Übergangskante zwischen Stirnseite (22) und flächiger Seite (30) sowie schräg zur flächigen Seite (30) verläuft, um diese zu überkragen, und dass das Rührreibschweißwerkzeug (10) unter Aufbringung von Druck in Richtung zur flächigen Seite (30) gleichzeitig überlapp- und stumpfverschweißt.

9. Verfahren nach einem der vorhergehenden Ansprüche, **dadurch gekennzeichnet, dass** mehrere zweite Materialstücke (14, 14') insbesondere gleichen Werkstoffs vorgesehen sind und eines der zweiten Materialstücke (14) stirnseitig an das erste Materialstück (12) angrenzt und mit ihm stumpfverschweißt wird, und dass ein weiteres zweites Materialstück (14') auf die flächige Seite (30) aufgelegt und mit dem ersten Materialstück (12) überlappverschweißt wird, insbesondere während gleichzeitig das eine zweite Materialstück (14) mit dem ersten Materialstück (12) stumpfverschweißt und dem weiteren zweiten Materialstück (14') rührreibverschweißt wird.

**10.** Verfahren nach Anspruch 9, **dadurch gekennzeichnet, dass** das erste Materialstück (12) eine andere Dicke (t1) als das stirnseitig an es angrenzende zweite Materialstück (14) im Bereich ihrer angrenzenden Stirnseiten (22) hat und das weitere zweite Materialstück (14') den Dickenunterschied ausgleicht.

**11.** Verfahren nach einem der vorhergehenden Ansprüche, **dadurch gekennzeichnet, dass** der das erste Materialstück (12) längs der flachen Seite überlappende Teil des zweiten Materialstücks (14, 14') nur abschnittsweise mit der flachen Seite des ersten Materialstücks (12) überlappverschweißt wird und zu seinem freien Endrand einen nicht mit dem ersten Materialstück (12) verschweißten Randstreifen (60) hat, wobei der Randstreifen (60) nach dem Schweißen abgetrennt wird, insbesondere durch spanende Bearbeitung oder Abreißen.

**12.** Verfahren nach Anspruch 11, **dadurch gekennzeichnet, dass** beim Überlappverschweißen eine Schlauchpore (80) am Übergang des überlappverschweißten Abschnitts und des Randstreifens (60) hergestellt wird, längs der der Randstreifen (60) abgetrennt wird.

**13.** Verfahren nach einem der vorhergehenden Ansprüche, **dadurch gekennzeichnet, dass** das erste Materialstück (12) aus Stahl und das zumindest eine zweite Materialstück (14, 14') aus Aluminium oder Kupfer oder das erste Materialstück (12) aus Kupfer und das zumindest eine zweite Materialstück (14, 14') aus Aluminium ist, insbesondere wobei das erste Materialstück (12) auf der flächigen Seite (30) im überlappverschweißten Abschnitt zinkbeschichtet ist, wobei das Rührreibschweißwerkzeug (10) beim Schweißen axial so zugestellt wird, dass die Zinkschicht im nicht verschweißten Bereich intakt bleibt.

**14.** Verfahren nach einem der vorhergehenden Ansprüche, **dadurch gekennzeichnet, dass** eine zu verschweißende Kante des ersten Materialstücks (12) vor oder nach Auflegen des zweiten Materialstücks (14, 14') und/oder vor oder während des Verfahrens des Pins (38) gemessen und abhängig von der Messung die Bewegung des Pins (38) bezogen auf die Richtung zum ersten Materialstück (12) gesteuert oder geregelt wird.

**15.** Werkstück, mit einem ersten Materialstück (12) und zumindest einem mit dem ersten Materialstück (12) rührreibverschweißten zweiten Materialstück (14, 14'), wobei das erste Materialstück (12) eine Stirnseite (22) und eine angrenzende flächige Seite (30), die eine Ober- oder eine Unterseite des ersten Materialstücks (12) bildet, und eine um wenigstens 250°C höhere Schmelztemperatur als das zumindest eine zweite Materialstück (14, 14') hat, und das erste Materialstück (12) an der Stirnseite (22) mit dem zumindest einen zweiten Materialstück (14, 14') stumpfverschweißt ist, **dadurch gekennzeichnet, dass** das erste Materialstück auch an der flächigen Seite (30) mit dem oder einem zweiten Materialstück (14, 14') überlappverschweißt ist, wobei die unterschiedlichen Werkstoffe der Materialstücke (12, 14, 14') im Schweißbereich nicht durchmischt sind oder eine Diffusionsschicht von maximal 0,5 mm Dicke, vorzugsweise maximal 0,1mm oder maximal 0,05 mm Dicke vorhanden ist.

## Claims

**1.** A method of friction stir welding a first piece of material (12) to at least one second piece of material (14, 14'), wherein

the first piece of material (12) has a face side (22) and an adjacent planar side (30) which forms a top side or a bottom side (24, 18) of the first piece of material (12), and has a melting temperature that is higher by at least 250°C than that of the at least one second piece of material (14, 14'), **characterized by** the following steps:

(a) the first piece of material (12) is overlapped in sections by at least one second piece of material (14, 14') adjacent to the face side (22) such that at least the second piece of material or one of the second pieces of material (14, 14') is adjacent to the planar side (30) and preferably laterally of the face side (22); and
(b) the first piece of material (12) is butt welded and overlap welded to the second piece of material or one of the second pieces of material (14, 14') by a friction stir welding tool (10) having a rotating pin (38), by the pin (38) being moved along the face side (22) and the tool (10) being moved along the planar side (30) in the adjacent second piece of material (14, 14').

**2.** The method according to claim 1, **characterized in that** at least 90%, preferably at least 95%, of the pin (38) is moved in the second piece of material (14, 14'), in particular that the pin (38) is moved completely in the at least one second piece of material (14, 14') without contacting the face side (22) and/or the planar side (30), and/or that in the welding process, the pin (38) and/or a step (44) of the pin (38) is moved along a path which, on the one hand, is defined by the profile of the face side (22) or of the planar side (30) of the first piece of material (12) based on the still non-welded condition, and, on the other hand, has a path width amounting to +/- 10% of the thickness (t1) of the non-welded first piece of material (12) in the region of the face side (22), in particular that the path is in the region from contact up to a depth of penetration of a maximum of 0.1 mm into the first piece of material (12).

3. The method according to claim 1 or 2, **characterized in that** during the friction stir welding, the different materials of the pieces of material (12, 14, 14') are not blended, or that a diffusion layer of a thickness of 0.5 mm maximum, preferably of a thickness of 0.1 mm maximum or of 0.05 mm maximum, is produced upon scratching.

4. The method according to any of the preceding claims, **characterized in that** the pin (38) has a step (44) which faces the planar side (30) and provides for the overlap welding simultaneously with the butt joint welding generated by the pin tip (42) projecting from the step (44).

5. The method according to claim 4, **characterized in that** a pin (38) is used which has a pin tip (42) that extends up to the step (44) and a section (46) extending from the step (44) up to a shoulder and having an axial length (h3), the axial length (h3) and the thickness (t2) of the second piece of material (14, 14') and the thickness (t1) of the first piece of material (12) being matched to each other such that the axial length (h3) is equal to or greater than the difference of the thickness (t2) of the second piece of material (14, 14') minus the thickness (t1) of the first piece of material (12) and a protruding weld seam (96) is produced.

6. The method according to any of the preceding claims, **characterized in that** the friction stir welding tool (10) is advanced toward the planar side (30) only so far that softened material of the at least one second piece of material (14, 14') is permanently present between the shoulder (34) and the planar side (30) of the first material.

7. The method according to any of the preceding claims, **characterized in that** the pin (38) has a pin tip (42) having an axial length (h1) as measured from the pin end (40) up to a step (44) of the pin (38), the axial length (h1) substantially corresponding to the thickness (t1) of the first piece of material (12) at the face side (22) thereof.

8. The method according to any of the preceding claims, **characterized in that** a second piece of material (14, 14') is formed so as to be plate-shaped at least in the welding area and, in relation to the first piece of material (12), extends obliquely to the face side (22) along a transition edge between the face side (22) and the planar side (30) and also obliquely to the planar side (30) to project over the latter, and that the friction stir welding tool (10) simultaneously overlap welds and butt welds while applying pressure towards the planar side (30).

9. The method according to any of the preceding claims, **characterized in that** a plurality of second pieces of material (14, 14') are provided which in particular are of the same material, and one of the second pieces of material (14) is adjacent to the first piece of material (12) on the face side and is butt welded to it, and that a further second piece of material (14') is placed on the planar side (30) and is overlap welded to the first piece of material (12), in particular while one second piece of material (14) is butt welded to the first piece of material (12) and friction stir welded to the further second piece of material (14') at the same time.

10. The method according to claim 9, **characterized in that** the first piece of material (12) has a thickness (t1) that is different from that of the second piece of material (14) adjacent to it on the face side in the region of their adjacent face sides (22), and the further second piece of material (14') compensates for the difference in thickness.

11. The method according to any of the preceding claims, **characterized in that** the portion of the second piece of material (14, 14') overlapping the first piece of material (12) along the flat side is overlap welded to the flat side of the first piece of material (12) only in sections and has an edge strip (60) toward its free end edge, the edge strip (60) not being welded to the first piece of material (12), the edge strip (60) being severed after the welding process, in particular by machining or tearing off.

12. The method according to claim 11, **characterized in that** in the overlap welding process, a wormhole (80) is produced at the transition of the overlap welded section and the edge strip (60), the edge strip (60) being severed along the wormhole (80).

13. The method according to any of the preceding claims, **characterized in that** the first piece of material (12) is made of steel and the at least one second piece of material (14, 14') is made of aluminum or copper, or the first piece of material (12) is made of copper and the at least one second piece of material (14, 14') is made of aluminum, in particular wherein the first piece of material (12) is zinc-plated on the planar side (30) in the overlap welded section, wherein the friction stir welding tool (10) is axially advanced during welding such that the zinc layer remains intact in the non-welded area.

14. The method according to any of the preceding claims, **characterized in that** an edge, to be welded, of the first piece of material (12) is measured before or after placing the second piece of material (14, 14') and/or before or during moving the pin (38) and, depending on the measurement, the movement of the pin (38) in relation to the direction toward the first piece of material (12) is open- or closed-loop controlled.

15. A workpiece, comprising a first piece of material (12) and at least one second piece of material (14, 14') friction stir welded to the first piece of material (12), wherein the first piece of material (12) has a face side (22) and an adjacent planar side (30) which forms a top side or a bottom side of the first piece of material (12), and has a melting temperature that is higher by at least 250°C than that of the at least one second piece of material (14, 14'), and the first piece of material (12) is butt welded on the face side (22) to the at least one second piece of material (14, 14'), **characterized in that** the first piece of material is also overlap welded on the planar side (30) to the, or one, second piece of material (14, 14'), wherein the different materials of the pieces of material (12, 14, 14') are not blended in the welding area or a diffusion layer of a thickness of 0.5 mm maximum, preferably of a thickness of 0.1 mm maximum or of 0.05 mm maximum, is present.

**Revendications**

1. Procédé de soudage par friction malaxage d'une première pièce de matière (12) à au moins une deuxième pièce de matière (14, 14'),
la première pièce de matière (12) présentant une face frontale (22) et une face plane (30) adjacente qui forme une face supérieure ou inférieure (24, 18) de la première pièce de matière (12), et présentant une température de fusion qui est supérieure d'au moins 250°C à celle de ladite au moins une deuxième pièce de matière (14, 14'), **caractérisé par** les étapes suivantes :

a) la première pièce de matière (12) est recouverte par tronçons par au moins une deuxième pièce de matière (14, 14') de manière adjacente à la face frontale (22) de sorte qu'au moins la deuxième pièce de matière ou l'une des deuxièmes pièces de matière (14, 14') est adjacente à la face plane (30) et de préférence latéralement à la face frontale (22) ; et
b) la première pièce de matière (12) est soudée bout à bout ou par recouvrement à la deuxième pièce de matière ou à l'une des deuxièmes pièces de matière (14, 14') au moyen d'un outil de soudage par friction malaxage (10) présentant un pion (38) en rotation en déplaçant le pion (38) le long de la face frontale (22) et en déplaçant l'outil (10) le long de la face plane (30) dans la deuxième pièce de matière (14, 14') adjacente.

2. Procédé selon la revendication 1, **caractérisé en ce que** le pion (38) est déplacé d'au moins 90%, de préférence d'au moins 95% dans la deuxième pièce de matière (14, 14'), en particulier **en ce que** le pion (38) est déplacé entièrement dans ladite au moins une deuxième pièce de matière (14, 14') sans contact avec la face frontale (22) et/ou la face plane (30), et/ ou **en ce que** le pion (38) et/ou un talon (44) du pion (38) est déplacé, lors de la procédure de soudage, le long d'une voie qui, d'une part, est définie par l'allure de la face frontale (22) ou de la face plane (30) de la première pièce de matière (12) par rapport à l'état pas encore soudé, et qui, d'autre part, présente une largeur de voie qui correspond à +/- 10% de l'épaisseur (t1) de la première pièce de matière (12) non soudée dans la zone de la face frontale (22), en particulier **en ce que** la voie se trouve dans la plage d'un contact jusqu'à une profondeur de pénétration de 0,1 mm au maximum dans la première pièce de matière (12).

3. Procédé selon la revendication 1 ou 2, **caractérisé en ce que** lors du soudage par friction malaxage, les différents matériaux des pièces de matière (12, 14, 14') ne sont pas mélangés ou **en ce qu'**une couche de diffusion d'une épaisseur de 0,5 mm au maximum, de préférence d'une épaisseur de 0,1 mm au maximum ou de 0,05 mm au maximum est réalisée lors du grattage.

4. Procédé selon l'une des revendications précédentes, **caractérisé en ce que** le pion (38) présente un talon (44) qui est tourné vers la face plane (30) et qui assure le soudage par recouvrement en même temps que le soudage par joint bout à bout produit par la pointe (42) du pion qui fait saillie du talon (44).

5. Procédé selon la revendication 4, **caractérisé en ce qu'**un pion (38) est utilisé, lequel présente une pointe de pion (42) qui s'étend jusqu'au talon (44) et un tronçon (46) de longueur axiale (h3) qui s'étend du talon (44) jusqu'à un épaulement, la longueur axiale (h3) et l'épaisseur (t2) de la deuxième pièce de matière (14, 14') et l'épaisseur (t1) de la première pièce de matière (12) étant adaptées les unes aux autres de sorte que la longueur axiale (h3) est supérieure ou égale à la différence de l'épaisseur (t2) de la deuxième pièce de matière (14, 14') moins l'épaisseur (t1) de la première pièce de matière (12) et qu'une soudure (96) en saillie est produite.

6. Procédé selon l'une des revendications précédentes, **caractérisé en ce que** l'outil de soudage par friction malaxage (10) est avancé en direction de la face plane (30) uniquement jusqu'à ce que de la matière ramollie de ladite au moins une deuxième pièce de matière (14, 14') est en permanence présente entre l'épaulement (34) et la face plane (30) de la première matière.

7. Procédé selon l'une des revendications précédentes, **caractérisé en ce que** le pion (38) présente une pointe de pion (42) de longueur axiale (h1), telle que mesurée de l'extrémité (40) du pion à un talon (44) du pion (38), laquelle correspond sensiblement à l'épaisseur (t1) de la première pièce de matière (12) à la face frontale (22) de celle-ci.

8. Procédé selon l'une des revendications précédentes, **caractérisé en ce qu'**une deuxième pièce de matière (14, 14') est réalisée en forme de plaque au moins dans la zone de soudage et s'étend, par rapport à la première pièce de matière (12), en oblique par rapport à la face frontale (22) le long d'une arête de transition entre la face frontale (22) et la face plane (30), et en oblique par rapport à la face plane (30) pour dépasser de celle-ci, et **en ce que** l'outil de soudage par friction malaxage (10) soude simultanément par recouvrement et bout à bout en appliquant une pression en direction de la face plane (30).

9. Procédé selon l'une des revendications précédentes, **caractérisé en ce qu'**il est prévu plusieurs deuxièmes pièces de matière (14, 14') en particulier en le même matériau, et **en ce que** l'une des deuxièmes pièces de matière (14) est adjacente à la première pièce de matière (12) du côté face frontale et est soudée bout à bout à celle-ci, et **en ce qu'**une autre deuxième pièce de matière (14') est placée sur la face plane (30) et est soudée à la première pièce de matière (12) par recouvrement, en particulier pendant qu'une deuxième pièce de matière (14) est simultanément soudée bout à bout à la première pièce de matière (12) et est soudée par friction malaxage à l'autre deuxième pièce de matière (14').

10. Procédé selon la revendication 9, **caractérisé en ce que** la première pièce de matière (12) présente une épaisseur (t1) différente de celle de la deuxième pièce de matière (14) adjacente à celle-ci côté face frontale dans la zone de leurs faces frontales (22) adjacentes, et **en ce que** l'autre deuxième pièce de matière (14') compense la différence d'épaisseur.

11. Procédé selon l'une des revendications précédentes, **caractérisé en ce que** la partie de la deuxième pièce de matière (14, 14') recouvrant la première pièce de matière (12) le long de la face plane est soudée par recouvrement à la face plane de la première pièce de matière (12) uniquement par tronçons et présente vers son bord d'extrémité libre une bande de bord (60) qui n'est pas soudée à la première pièce de matière (12), la bande de bord (60) étant retirée après le soudage, en particulier par usinage par enlèvement de copaux ou par arrachage.

12. Procédé selon la revendication 11, **caractérisé en ce que** lors du soudage par recouvrement, une soufflure vermiculaire (80) le long de laquelle la bande de bord (60) est retirée est produite à la transition du tronçon soudé par recouvrement et la bande de bord (60).

13. Procédé selon l'une des revendications précédentes, **caractérisé en ce que** la première pièce de matière (12) est en acier et ladite au moins une deuxième pièce de matière (14, 14') est en aluminium ou en cuivre, ou **en ce que** la première pièce de matière (12) est en cuivre et ladite au moins une deuxième pièce de matière (14, 14') est en aluminium, la première pièce de matière (12) étant en particulier revêtue de zinc sur la face plane (30) dans le tronçon soudé par recouvrement, l'outil de soudage par friction malaxage (10) étant avancé axialement lors de soudage de telle sorte que le revêtement de zinc reste intact dans la zone non soudée.

14. Procédé selon l'une des revendications précédentes, **caractérisé en ce qu'**une arête à souder de la première pièce de matière (12) est mesurée avant ou après le placement de la deuxième pièce de matière (14, 14') et/ou avant ou pendant le déplacement du pion (38), et **en ce que** le mouvement du pion (38) par rapport au sens vers la première pièce de matière (12) est commandé ou réglé en fonction de la mesure.

15. Pièce à usiner, comprenant une première pièce de matière (12) et au moins une deuxième pièce de matière (14, 14') soudée par friction malaxage à la première pièce de matière (12), la première pièce de matière (12) présentant une face frontale (22) et une face plane (30) adjacente qui forme une face supérieure ou inférieure de la première pièce de matière (12), et présentant une température de fusion qui est supérieure d'au moins 250°C à celle de ladite au moins une deuxième pièce de matière (14, 14'), et la première pièce de matière (12), sur la face frontale (22), étant soudée bout à bout à ladite au moins une deuxième pièce de matière (14, 14'), **caractérisée en ce que** la première pièce de matière, sur la face plane (30), est également soudée par recouvrement à ladite ou à une deuxième pièce de matière (14, 14'), les différents matériaux des pièces de matière (12, 14, 14') n'étant pas mélangés dans la zone de soudage, ou une couche de diffusion d'une épaisseur de 0,5 mm au maximum, de préférence d'une épaisseur de 0,1 mm au maximum ou de 0,05 mm au maximum étant présente.

## Fig. 1

## Fig. 2

Fig. 3

Fig. 4

Fig. 5

Fig. 6

Fig. 7

Fig. 8

**Fig. 9**

**Fig. 10**

**Fig. 11**

Fig. 12

Fig. 13

Fig. 14

Fig. 15a

Fig. 15b

Fig. 16

Fig. 17

Fig. 18

38'

10

34

## Fig. 19

10

14'

42

14

22

12

## Fig. 20

Fig. 21a

Fig. 21b

Fig. 22

Fig. 23

Fig. 24

Fig. 25

Fig. 26

Fig. 27

Fig. 28

Fig. 29

Fig. 30

Fig. 31

Fig. 32

Fig. 33

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1279458 A2
- DE 69823746 T2
- JP 2005324251 A